# EUROPEAN PATENT APPLICATION

(11) **EP 4 632 113 A1**
(43) Date of publication of application: **15.10.2025**
(21) Application number: 23926421.1
(22) Date of filing: 13.11.2023
(51) Int. Cl.: C25B 9/00, C25B 1/04, C25B 9/23, C25B 9/60, C25B 13/02

(54) **ELECTROLYTIC CELL AND ELECTROLYTIC APPARATUS**

(30) Priority: 08.03.2023 JP 2023035580
(71) Applicant: Mitsubishi Heavy Industries, Ltd., Tokyo 100-8332 (JP)
(72) Inventor: URASHITA, Yasutaka, Tokyo 100-8332 (JP); WATANABE, Yuta, Tokyo 100-8332 (JP); NAKAYAMA, Yoshitaka, Tokyo 100-8332 (JP); SUKENOBU, Takahiro, Tokyo 100-8332 (JP); MUKAI, Daisuke, Tokyo 100-8332 (JP); TSURUMAKI, Shigeru, Tokyo 100-8332 (JP)
(74) Representative: Studio Torta S.p.A.
(86) International application number: PCT/JP2023/040791
(87) International publication number: WO 2024/185215

(57) **Abstract**

The electrolysis cell according to the present disclosure includes: a first separator including a first surface; a second separator disposed with an accommodating space apart from the first separator, the second separator including a second surface facing the first surface; an ion-exchange membrane disposed in the accommodation space; a first power feeder disposed between the first separator and the ion-exchange membrane; a first catalyst layer disposed between the first power feeder and the ion-exchange membrane; a second power feeder disposed between the second separator and the ion-exchange membrane; a second catalyst layer disposed between the second power feeder and the ion-exchange membrane; and a flow direction changing part provided as a part of the first separator or disposed between the first separator and the first power feeder, the flow direction changing part changing a flow direction of at least a portion of an electrolyte flowing along the first surface in a first direction to a second direction intersecting the first surface at each of a plurality of positions in the first direction.

## Description

### Technical Field

The present disclosure relates to an electrolysis cell and an electrolyzer.

This application claims priority based on Japanese Patent Application No. 2023-035580 filed in Japan on March 8, 2023, the contents of which are incorporated herein.

### Background Art

Patent Document 1 discloses a fuel cell including two gas diffusion layers (a cathode and an anode) sandwiching a polymer electrolytic membrane, and first and second separators disposed outside the respective two gas diffusion layers and each having a gas flow path formed on a surface facing each of the gas diffusion layers. In each of the separators, a convex portion which is a rib forming a gas flow path and a recessed portion which is a gas flow path are formed in parallel, and the separator has a gas inlet at one end of the gas flow path and a gas outlet at the other end thereof. The rib abuts on the corresponding gas diffusion layer and is linearly formed, the gas flow path is linearly formed apart from the gas diffusion layer, the gas inlet side is the upstream side of gas flow, the gas outlet side is the downstream side of the gas flow, and the reaction gas flows in the same direction in each gas flow path. A protrusion protruding toward the cathode is provided at a bottom surface downstream end of the gas flow path on the gas inlet side.

### Citation List

### Patent Literature

Patent Document 1: JP 2009-64772 A

### Summary of Invention

### Problems to be Solved by the Invention

Incidentally, in the field of an electrolysis cell in which an electrolyte containing hydroxide ions (OH⁻) is electrolytically reduced, one electrode catalyst layer is disposed on each of both surfaces of an ion-exchange membrane, and a power feeder is provided on a side of each of the electrode catalyst layers opposite to the ion-exchange membrane. When an electrolyte is supplied from the outside to each of the electrode catalyst layers via the power feeder, a gradient of hydroxide ion concentration may be generated between the two electrode catalyst layers sandwiching the ion-exchange membrane. Due to the concentration gradient of hydroxide ions, a potential difference based on the Donnan effect is generated between the two electrode catalyst layers, and as a result, the electrolysis efficiency may decrease.

The present disclosure is made to solve the problem described above, and an object of the present disclosure is to provide an electrolysis cell and an electrolyzer that can improve the electrolysis efficiency.

### Solution to Problem

To solve the problem described above, an electrolysis cell according to the present disclosure includes: a first separator including a first surface; a second separator disposed with an accommodation space apart from the first separator, the second separator including a second surface facing the first surface; an ion-exchange membrane disposed in the accommodation space; a first power feeder disposed between the first separator and the ion-exchange membrane; a first catalyst layer disposed between the first power feeder and the ion-exchange membrane; a second power feeder disposed between the second separator and the ion-exchange membrane; a second catalyst layer disposed between the second power feeder and the ion-exchange membrane; and a flow direction changing part provided as a part of the first separator or provided between the first separator and the first power feeder, the flow direction changing part changing a flow direction of at least a portion of an electrolyte flowing along the first surface in a first direction to a second direction intersecting the first surface at each of a plurality of positions in the first direction.

An electrolyzer according to the present disclosure includes: the electrolysis cell described above; an electrolyte supply unit that supplies an electrolyte to the electrolysis cell; and a power supply unit that applies voltage to the electrolysis cell.

### Advantageous Effects of Invention

The present disclosure can provide an electrolysis cell and an electrolyzer which can improve the electrolysis efficiency.

### Brief Description of Drawings

FIG. 1 is a schematic configuration diagram illustrating an overall configuration of an electrolyzer according to a first embodiment of the present disclosure.
FIG. 2 is a diagram schematically illustrating an electrolysis cell according to the first embodiment of the present disclosure.
FIG. 3 is an exploded perspective view schematically illustrating the electrolysis cell according to the first embodiment of the present disclosure.
FIG. 4 is a cross-sectional view illustrating the electrolysis cell according to the first embodiment of the present disclosure.
FIG. 5 is a view of a second inner surface of an anode separator main body viewed from a direction of line V-V in FIGS. 2 and 4.
FIG. 6 is a cross-sectional view of the anode separator main body, a flow direction changing part, an anode power feeder, an anode catalyst layer, and an ion-exchange membrane taken along line VI-VI in FIG. 5.
FIG. 7 is a cross-sectional view of the anode separator main body, the flow direction changing part (a part of an anode separator), a membrane electrode assembly, the flow direction changing part (a part of a cathode separator), and a cathode separator main body according to the first embodiment of the present disclosure, which corresponds to the portion illustrated in FIG. 6.
FIG. 8 is a cross-sectional view of an anode separator main body, a flow direction changing part, an anode power feeder, an anode catalyst layer, and an ion-exchange membrane according to a second embodiment of the present disclosure, which corresponds to the portion illustrated in FIG. 6.
FIG. 9 is a cross-sectional view of an anode separator main body, a flow direction changing part, an anode power feeder, an anode catalyst layer, and an ion-exchange membrane according to a third embodiment of the present disclosure, which corresponds to the portion illustrated in FIG. 6.
FIG. 10 is a diagram of a second inner surface of an anode separator main body according to a fourth embodiment of the present disclosure, which corresponds to the portion illustrated in FIG. 5.
FIG. 11 is a diagram schematically illustrating an electrolysis cell according to a fifth embodiment of the present disclosure, which corresponds to the portion illustrated in FIG. 2.
FIG. 12 is a diagram of a second inner surface of an anode separator main body viewed from a direction of line XII-XII in FIG. 11.
FIG. 13 is a cross-sectional view of the anode separator main body, a flow direction changing part, an anode power feeder, an anode catalyst layer, and an ion-exchange membrane viewed from a direction of line XIII-XIII in FIG. 12.

### Description of Embodiments

An electrolyzer 1 according to an embodiment of the present disclosure will be described below with reference to the accompanying drawings. In the following description, configurations having the same or similar functions are denoted by the same reference signs. The term "facing" as used herein means that two members overlap each other when viewed in a certain direction, and may include a case where another member (for example, another layer) exists between the two members.

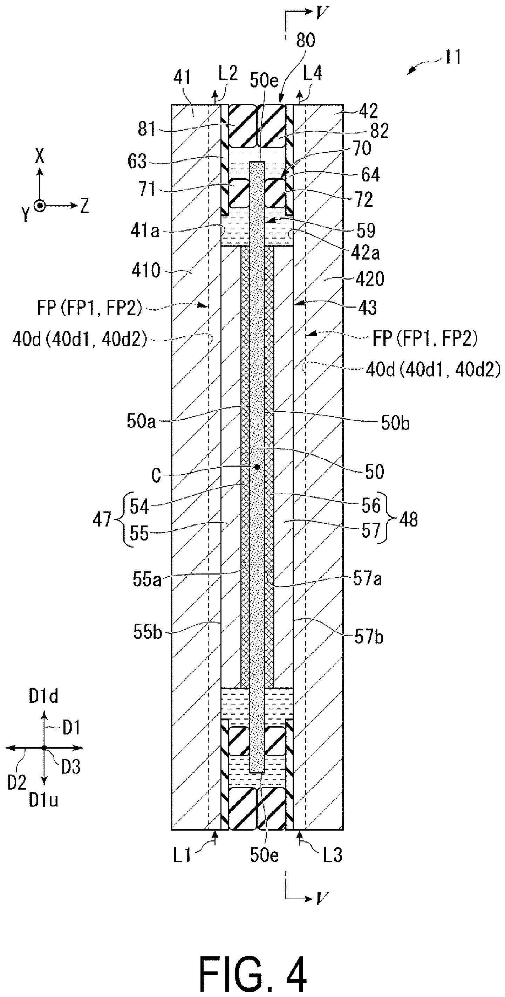

First, with reference to FIG. 4, a Z direction, an X direction, and a Y direction are defined. The Z direction is a direction from a cathode separator 41 toward an anode separator 42 to be described below (a left-right direction in FIG. 4, a second direction D2 described below). The Z direction is also a layering direction when an ion-exchange membrane 50, a cathode catalyst layer 54, a cathode power feeder 55, an anode catalyst layer 56, and an anode power feeder 57 of a membrane electrode assembly 43 to be described below form a layered structure. The X direction is a direction intersecting (for example, orthogonal to) the Z direction and is a direction from a central portion C of the membrane electrode assembly 43 toward one end portion of the membrane electrode assembly 43 (an up-down direction in FIG. 4, a first direction D1 described below). The Y direction is a direction intersecting (for example, orthogonal to) the Z direction and the X direction and is, for example, a depth direction of the paper surface in FIG. 4 (a third direction D3 described below). The term "area" as used herein means an area when viewed in the Z direction (that is, an area extending in the X direction and the Y direction). The term "outline size" as used herein means an outline size when viewed in the Z direction. That is, the "outline size" and the "area" may mean substantially the same, and may be replaced with each other as appropriate.

### First Embodiment of Electrolyzer

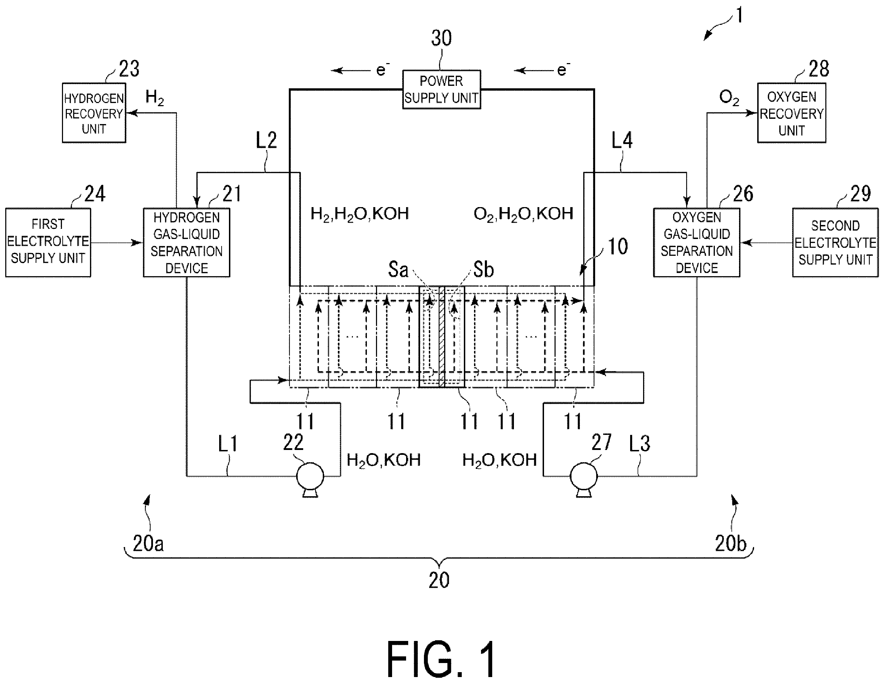

FIG. 1 is a schematic configuration diagram illustrating an overall configuration of an electrolyzer 1 according to a first embodiment of the present disclosure. The electrolyzer 1 is an apparatus (electrolyzing apparatus) that generates hydrogen (H₂) by electrolyzing water (H₂O) contained in an electrolyte Es. The electrolyzer 1 is not limited to a configuration in which water is electrolyzed to generate hydrogen, and may be, for example, an apparatus in which the electrolyte Es is electrolyzed for the purpose of generation or purification of an organic substance or an inorganic substance, condensation of a predetermined substance, which are contained in the electrolyte Es, or the like. In the present embodiment, the electrolyzer 1 is, for example, an apparatus of an anion-exchange membrane (AEM) type. However, the electrolyzer 1 is not limited to the anion-exchange membrane type, and may be an apparatus of a polymer electrolyte membrane (PEM) type. As illustrated in FIG. 1, the electrolyzer 1 includes, for example, an electrolysis cell stack 10, an electrolyte supply unit 20, and a power supply unit 30.

### Electrolysis Cell Stack

The electrolysis cell stack 10 is an aggregate of a plurality of electrolysis cells 11. For example, the electrolysis cell stack 10 is formed by arranging a plurality of electrolysis cells 11 in one direction. Each electrolysis cell 11 includes a cathode chamber Sa and an anode chamber Sb. The electrolysis cell 11 will be described in detail below.

### Electrolyte Supply Unit

The electrolyte supply unit 20 is a supply unit that supplies the electrolyte Es to each electrolysis cell 11. The electrolyte Es is, for example, pure water or an alkaline aqueous solution. As the electrolyte Es in the present embodiment, a potassium hydroxide (KOH) aqueous solution is adopted as the alkaline aqueous solution. The electrolyte supply unit 20 includes a cathode-side supply unit 20a and an anode-side supply unit 20b.

The cathode-side supply unit 20a is a supply unit that supplies the electrolyte Es to the cathode chamber Sa of each electrolysis cell 11. The cathode-side supply unit 20a includes, for example, a hydrogen gas-liquid separation device 21, a first pump 22, a hydrogen recovery unit 23, a first electrolyte supply unit 24, and piping lines L1 and L2. In the electrolysis cell stack 10 in which the plurality of electrolysis cells 11 are stacked, for example, the piping lines L1 and L2 are connected to a piping structure in the electrolysis cells 11, called a manifold, in which the electrolysis cells 11 are coupled to each other. The electrolyte is supplied on the piping line L1 side, and the electrolyte and the generated hydrogen are discharged on the piping line L2 side.

The hydrogen gas-liquid separation device 21 stores the electrolyte Es. A supply port of the hydrogen gas-liquid separation device 21 is connected to the cathode chamber Sa of the electrolysis cell 11 via the piping line L1. The first pump 22 is provided in the middle of the piping line L1 and feeds the electrolyte Es stored in the hydrogen gas-liquid separation device 21 to the cathode chamber Sa of the electrolysis cell 11.

A return port of the hydrogen gas-liquid separation device 21 is connected to the cathode chamber Sa of the electrolysis cell 11 via the piping line L2. The electrolyte Es containing hydrogen generated in the electrolysis cell 11 flows into the hydrogen gas-liquid separation device 21 from the electrolysis cell 11. The hydrogen gas-liquid separation device 21 includes a gas-liquid separation unit that separates hydrogen contained in the electrolyte Es. The hydrogen separated from the electrolyte Es by the hydrogen gas-liquid separation device 21 is recovered by the hydrogen recovery unit 23. The hydrogen gas-liquid separation device 21 is replenished with the electrolyte Es from the first electrolyte supply unit 24.

On the other hand, the anode-side supply unit 20b is a supply unit that supplies the electrolyte Es to the anode chamber Sb of each electrolysis cell 11. The anode-side supply unit 20b includes, for example, an oxygen gas-liquid separation device 26, a second pump 27, an oxygen recovery unit 28, a second electrolyte supply unit 29, and piping lines L3 and L4. In the electrolysis cell stack 10 in which the plurality of electrolysis cells 11 are stacked, for example, the piping lines L3 and L4 are connected to a piping structure in the electrolysis cells 11, called a manifold, in which the electrolysis cells 11 are coupled to each other. The electrolyte is supplied on the piping line L3 side, and the electrolyte and the generated oxygen are discharged on the piping line L4 side.

The oxygen gas-liquid separation device 26 stores the electrolyte Es. A supply port of the oxygen gas-liquid separation device 26 is connected to the anode chamber Sb of the electrolysis cell 11 via the piping line L3. The second pump 27 is provided in the middle of the piping line L3 and feeds the electrolyte Es stored in the oxygen gas-liquid separation device 26 to the anode chamber Sb of the electrolysis cell 11.

A return port of the oxygen gas-liquid separation device 26 is connected to the anode chamber Sb of the electrolysis cell 11 via the piping line L4. The electrolyte Es containing oxygen (O₂) generated in the electrolysis cell 11 flows into the oxygen gas-liquid separation device 26 from the electrolysis cell 11. The oxygen gas-liquid separation device 26 includes a gas-liquid separation unit that separates oxygen contained in the electrolyte Es. The oxygen separated from the electrolyte Es by the oxygen gas-liquid separation device 26 is recovered by the oxygen recovery unit 28. The oxygen gas-liquid separation device 26 is replenished with the electrolyte Es from the second electrolyte supply unit 29.

### Power Supply Unit

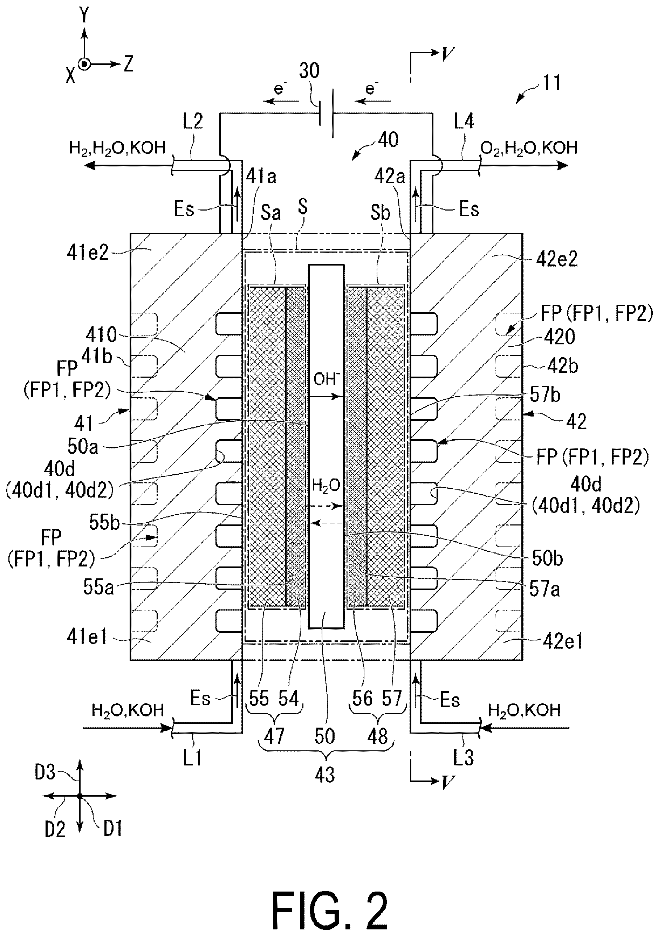

The power supply unit 30 is a DC power supply apparatus that applies voltage to the electrolysis cell 11. The power supply unit 30 applies a DC voltage required for electrolyzing the electrolyte Es between a cathode 47 and an anode 48 (see FIG. 2, described below) of the electrolysis cell 11. In the electrolysis cell stack 10 in which the plurality of electrolysis cells 11 are stacked, for example, electric wires from the power supply unit 30 are connected to electrodes at both ends of the electrolysis cell stack 10, and a required voltage is applied at a required DC current and a multiple of the number of stacked stages to supply required electric power. Note that in the present embodiment, the following equation (i) is established. (Electrolytic current (A) required for one electrolysis cell 11) × (Electrolytic voltage (V) required for one electrolysis cell 11) × (The number of stacked electrolysis cells 11) = Supply power (W)

### Configuration of Electrolysis Cell

The electrolysis cell 11 is a device (water electrolysis cell) that generates hydrogen by causing electrolysis of water contained in the electrolyte Es by electric energy input from the outside. Note that the electrolysis cell 11 is not limited to a device that generates hydrogen by causing electrolysis of water, and may be a device of a different type, for example, a device that electrolytically reduces carbon dioxide (CO₂). FIG. 2 is a cross-sectional view schematically illustrating the electrolysis cell 11. As illustrated in FIG. 2, the electrolysis cell 11 includes, for example, a cathode separator 41, an anode separator 42, and a membrane electrode assembly 43.

### Cathode Separator

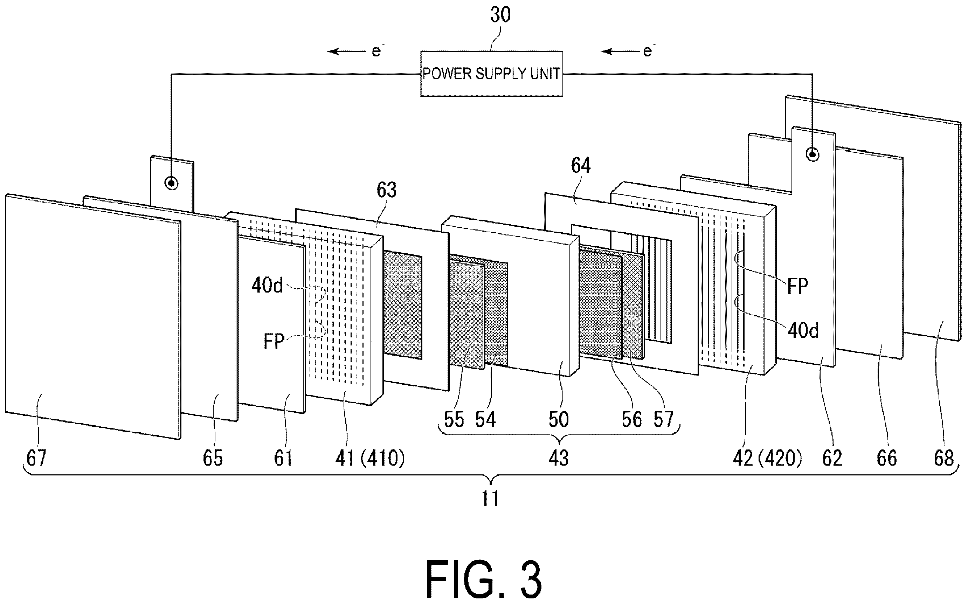

The cathode separator 41 is a member that defines one surface of an accommodation space S of the electrolysis cell 11. The accommodation space S is a space including the cathode chamber Sa and the anode chamber Sb to be described below. The cathode separator 41 has, for example, a rectangular plate shape and is formed of a metal member such as stainless steel, titanium (Ti), or nickel (Ni), a conductive carbon plate, a conductive carbon plate sealed with a molding resin, or the like. A negative voltage is applied to the cathode separator 41 from the power supply unit 30 via a first current collector 61 (see FIG. 3) to be described below, for example. The cathode separator 41 is an example of a "first separator" or a "second separator". In the present embodiment, the cathode separator 41 includes a cathode separator main body 410. The cathode separator main body 410 is an example of a "separator main body".

The cathode separator main body 410 includes a first separator end portion 41e1 and a second separator end portion 41e2 located on a side opposite to the first separator end portion 41e1. The piping line L1 described above is connected to the first separator end portion 41e1 of the cathode separator main body 410. The piping line L2 described above is connected to the second separator end portion 41e2 of the cathode separator main body 410.

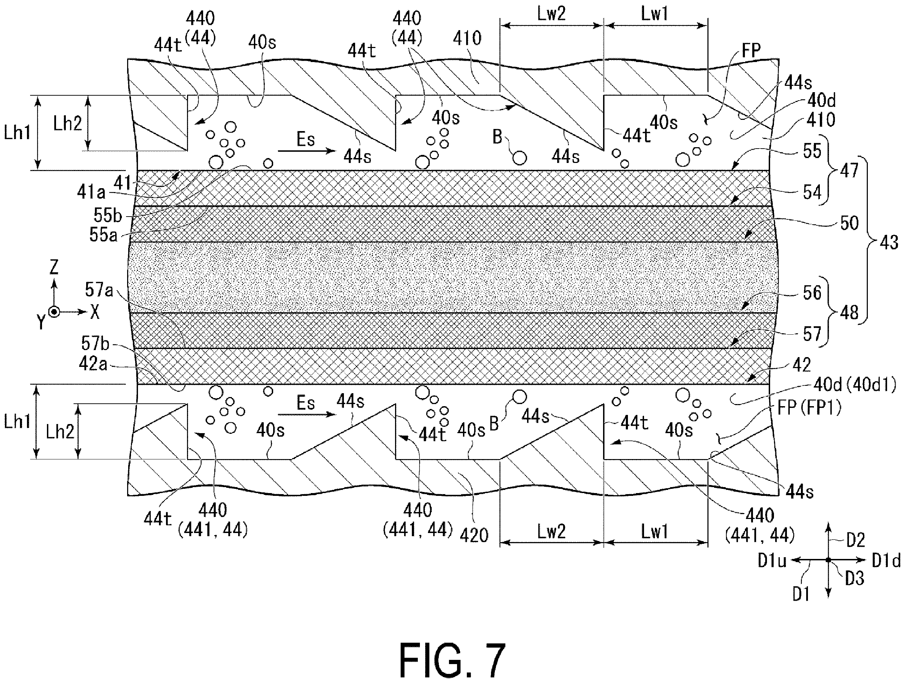

The cathode separator main body 410 includes a first inner surface 41a facing the cathode chamber Sa described below and a surface 41b facing a side opposite to the first inner surface 41a. The first inner surface 41a has a flow path FP through which the electrolyte Es supplied from the piping line L1 flows. The flow path FP is, for example, defined by a plurality of grooves 40d provided to be recessed from the first inner surface 41a. The cathode separator main body 410 has a plurality of (for example, several tens of) grooves 40d recessed from the first inner surface 41a in the second direction D2. Note that in FIG. 2, eight grooves 40d are schematically illustrated. The second direction D2 is a direction intersecting the first inner surface 41a (in the present embodiment, a direction orthogonal to the first inner surface 41a), and is also a direction in which the first inner surface 41a and the surface 41b are arranged. Each groove 40d is formed to have a depth (dimension Lh1 illustrated in FIG. 7) of 0.4 mm or more and 2.0 mm or less, for example. Each groove 40d extends along the first direction D1. In the present embodiment, the first direction D1 is, for example, a direction orthogonal to the direction in which the first separator end portion 41e1 and the second separator end portion 41e2 are arranged (a direction orthogonal to the second direction D2). The first direction D1 is one of the flow directions of the electrolyte Es flowing through the flow path FP. Hereinafter, for convenience of description, one side (front side of the paper surface in FIG. 2) in the first direction D1 (up-down direction in FIG. 2) which is one of the flow directions of the electrolyte Es is referred to as an "upstream side D1u" (for convenience of illustration, the reference numeral is omitted in FIG. 2. See also FIG. 4), and the side opposite to the upstream side D1u (depth side of the paper surface in FIG. 2) is referred to as a "downstream side D1d" (for convenience of illustration, the reference numeral is omitted in FIG. 2. See also FIG. 4). The plurality of grooves 40d are arranged to be spaced apart from each other in a third direction D3 intersecting the first direction D1 and the second direction D2. In the present embodiment, the third direction D3 is a direction orthogonal to each of the first direction D1 and the second direction D2. The plurality of grooves 40d are arranged at equal intervals in the third direction D3. The electrolyte Es flowing through the flow path FP defined by the grooves 40d in the first direction D1 is discharged to the outside of the electrolysis cell 11 (for example, the hydrogen gas-liquid separation device 21 illustrated in FIG. 1) through the piping line L2. The configuration of the grooves 40d formed in the cathode separator main body 410 will be described in detail below. The first inner surface 41a is an example of a "first surface" or a "second surface". In a case where the cathode separator 41 is an example of the first separator, the first inner surface 41a is an example of the first surface. On the other hand, in a case where the cathode separator 41 is an example of the second separator, the first inner surface 41a is an example of the second surface.

Note that each structure (for example, a flow path structure of the electrolyte Es) illustrated in FIG. 2 is merely an example and does not limit the contents of the present embodiment. For example, as the flow path structure, various structures can be used according to the size, purpose, use environment, and the like of the apparatus. The same applies to each configuration illustrated in other drawings.

### Anode Separator

The anode separator 42 is a member that is disposed with the accommodation space S between at least a part of the cathode separator 41 and the anode separator 42 and defines another surface of the accommodation space S. The anode separator 42 has, for example, a rectangular plate shape and is formed of a metal member such as stainless steel, titanium, or nickel, a conductive carbon plate, a conductive carbon plate sealed with a mold resin, or the like. A positive voltage is applied to the anode separator 42 from the power supply unit 30 via a second current collector 62 (see FIG. 3) to be described below. The anode separator 42 and the cathode separator 41 included in the same electrolysis cell 11 form an electrolytic tank 40 of the electrolysis cell 11 as a pair of separators. The anode separator 42 is an example of the "first separator" or the "second separator". In a case where the cathode separator 41 is an example of the first separator, the anode separator 42 is an example of the second separator. On the other hand, in a case where the cathode separator 41 is an example of the second separator, the anode separator 42 is an example of the first separator. The anode separator 42 has an anode separator main body 420. The anode separator main body 420 is an example of the "separator main body".

The anode separator main body 420 includes a first separator end portion 42e1 (for example, a lower end portion) and a second separator end portion 42e2 (for example, an upper end portion) located on a side opposite to the first separator end portion 42e1. The piping line L3 described above is connected to the first separator end portion 42e1 of the anode separator main body 420. The piping line L4 described above is connected to the second separator end portion 42e2 of the anode separator main body 420.

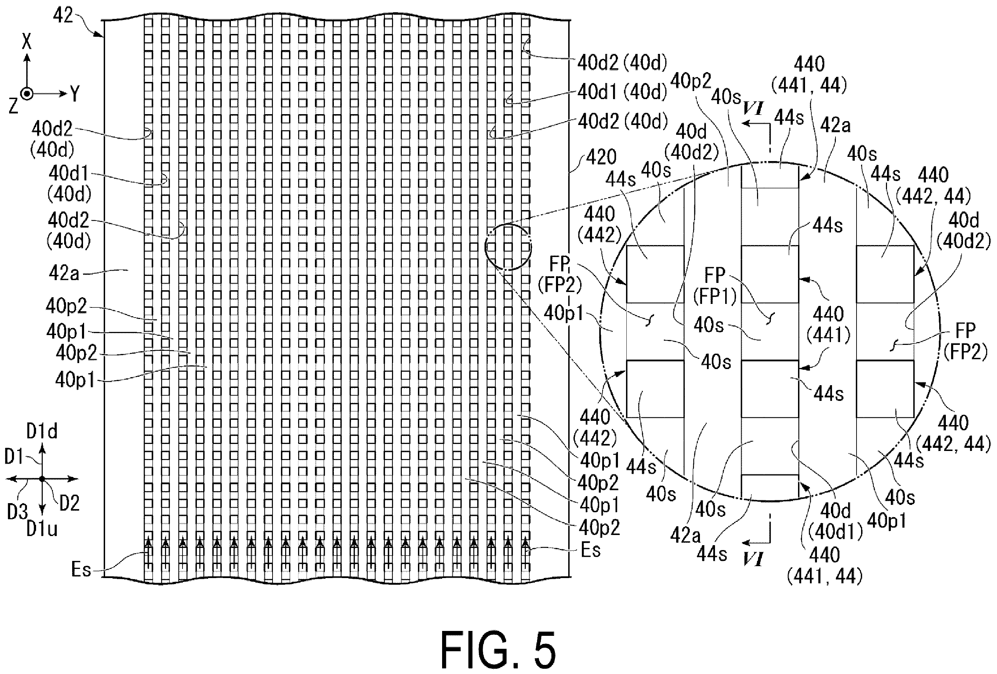

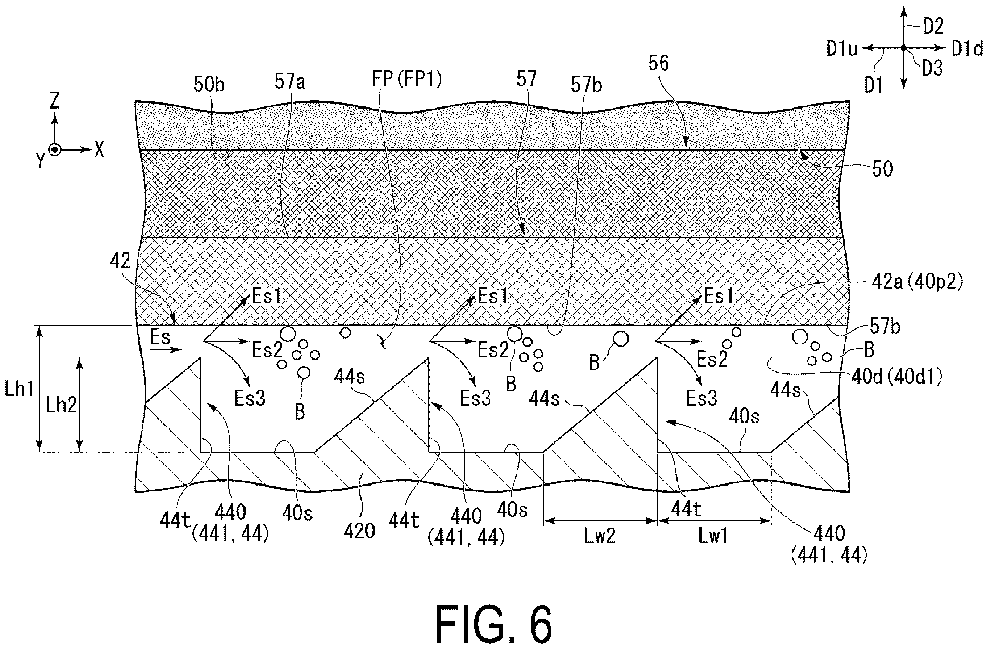

The anode separator main body 420 includes a second inner surface 42a facing the anode chamber Sb to be described below and a surface 42b facing a side opposite to the second inner surface 42a. The second inner surface 42a has the flow path FP through which the electrolyte Es supplied from the piping line L3 flows. The flow path FP is, for example, defined by a plurality of grooves 40d provided to be recessed from the second inner surface 42a. The anode separator main body 420 has the plurality of (for example, several tens of) grooves 40d recessed from the second inner surface 42a in the second direction D2 (direction orthogonal to the second inner surface 42a). Each groove 40d of the anode separator main body 420 is formed to have a depth (dimension Lh1 illustrated in FIGS. 6 and 7) of, for example, 0.4 mm or more and 2.0 mm or less. In the present embodiment, each groove 40d of the anode separator main body 420 has the same depth as that of each groove 40d of the cathode separator main body 410. The number of grooves 40d formed in the anode separator main body 420 is equal to the number of grooves 40d formed in the cathode separator main body 410. Each groove 40d of the anode separator main body 420 extends along the first direction D1. The plurality of grooves 40d are arranged at equal intervals in the third direction D3 (see FIG. 5). The electrolyte Es having flowed through the flow path FP defined by the grooves 40d is discharged to the outside of the electrolysis cell 11 (e.g., the oxygen gas-liquid separation device 26 illustrated in FIG. 1) through the piping line L4. The configuration of the grooves 40d formed in the anode separator main body 420 will be described in detail below. The second inner surface 42a is an example of the "first surface" or the "second surface". In a case where the anode separator 42 is an example of the first separator, the second inner surface 42a is an example of the first surface. On the other hand, in a case where the anode separator 42 is an example of the second separator, the second inner surface 42a is an example of the second surface.

Note that here, for convenience of description, a configuration in which the first inner surface 41a of the cathode separator main body 410 includes the grooves 40d for the flow path and the second inner surface 42a of the anode separator main body 420 includes the grooves 40d for the flow path is described. However, for example, the cathode separator main body 410 of each of the electrolysis cells 11 included in the electrolysis cell stack 10 (see FIG. 1) may be a bipolar plate including similar grooves 40d for the flow path (indicated by a dash-double-dot line in FIG. 2) in the surface 41b on a side opposite to the first inner surface 41a in addition to the first inner surface 41a. The anode separator 42 of each of the electrolysis cells 11 included in the electrolysis cell stack 10 may be a bipolar plate including similar grooves 40d for the flow path (indicated by a dash-double-dot line in FIG. 2) in the surface 42b on a side opposite to the second inner surface 42a in addition to the second inner surface 42a. Note that the grooves 40d for the flow path provided in both surfaces of the cathode separator 41 and the grooves 40d for the flow path provided in both surfaces of the anode separator 42 may be different in shape and arrangement from each other.

### Configuration of Membrane Electrode Assembly

The membrane electrode assembly (MEA) 43 is a structure in which an ion-exchange membrane, a catalyst, and a power feeder are assembled. As illustrated in FIG. 2, the membrane electrode assembly 43 is disposed between the cathode separator 41 and the anode separator 42 and is located in the accommodation space S. The membrane electrode assembly 43 includes, for example, the ion-exchange membrane 50, the cathode catalyst layer 54, the cathode power feeder 55, the anode catalyst layer 56, and the anode power feeder 57.

### Ion-Exchange Membrane

The ion-exchange membrane 50 is a membrane that selectively allows ions to pass therethrough. The ion-exchange membrane 50 is, for example, a solid polymer electrolyte membrane. The ion-exchange membrane 50 is, for example, an anion-exchange membrane (AEM) having hydroxide ion (OH⁻) conductivity. However, the ion-exchange membrane 50 is not limited to the example described above and may be, for example, a proton-exchange membrane (PEM) of a type different from the example described above.

The ion-exchange membrane 50 has, for example, a rectangular sheet shape and has flexibility. The outline size of the ion-exchange membrane 50 is smaller than the outline size of the cathode separator 41 or the outline size of the anode separator 42. The ion-exchange membrane 50 is disposed between the cathode separator 41 and the anode separator 42 and is located in the accommodation space S described above.

The ion-exchange membrane 50 has a first exchange membrane surface 50a facing the first inner surface 41a of the cathode separator main body 410 and a second exchange membrane surface 50b located on the side opposite to the first exchange membrane surface 50a. The second exchange membrane surface 50b faces the second inner surface 42a of the anode separator main body 420. In the accommodation space S, the cathode chamber Sa is defined between the first exchange membrane surface 50a of the ion-exchange membrane 50 and the first inner surface 41a of the cathode separator main body 410. In addition, in the accommodation space S, the anode chamber Sb is defined between the second exchange membrane surface 50b of the ion-exchange membrane 50 and the second inner surface 42a of the anode separator main body 420.

In the cathode chamber Sa, in a case where voltage is applied to the electrolysis cell 11, the following chemical reaction indicated by (Chem. 1) occurs, and hydrogen is generated from the electrolyte Es. Note that the expression "XX is generated" as used herein may include a case where another substance is generated simultaneously with the generation of XX. A hydroxide group generated in the cathode chamber Sa moves from the cathode chamber Sa to the anode chamber Sb through the membrane electrode assembly 43.

2H₂O + 2e⁻ → H₂ + 2OH⁻ ··· (Chem. 1)

In the anode chamber Sb, in a case where voltage is applied to the electrolysis cell 11, the following chemical reaction indicated by (Chem. 2) occurs, and oxygen is generated from the electrolyte Es.

2OH⁻ → 1/2O₂ + H₂O + 2e⁻ ··· (Chem. 2)

As a result, the following chemical reaction indicated by (Chem. 3) occurs in the electrolysis cell 11 in whole.

H₂O → H₂ + 1/2O₂ ··· (Chem. 3)

As an example of a membrane having relatively high ion conductivity, the ion-exchange membrane 50 may include a polystyrene-based or tetraphenyl-based composition in the main chain and an imidazolium group or a quaternary ammonium group in the side chain. On the other hand, instead of this, the ion-exchange membrane 50 may include a polysulfone-based or bromobutylstyrene-based composition as an example of a membrane having relatively high oxidation resistance.

### Cathode Catalyst Layer

The cathode catalyst layer 54 is a layer (electrode catalyst layer) that accelerates the above-described chemical reaction in the cathode chamber Sa. The cathode catalyst layer 54 has, for example, a rectangular sheet shape. In the present embodiment, the outline size of the cathode catalyst layer 54 is smaller than the outline size of the ion-exchange membrane 50, for example. The cathode catalyst layer 54 is disposed in the cathode chamber Sa and is provided on the first exchange membrane surface 50a of the ion-exchange membrane 50. The cathode power feeder 55 described below is connected to the cathode catalyst layer 54 from the side opposite to the ion-exchange membrane 50. The cathode catalyst layer 54 to which a negative voltage is applied from the power supply unit 30 via the first separator and the cathode power feeder 55 functions as a part of the cathode 47 of the electrolysis cell 11. The cathode catalyst layer 54 is an example of a "first catalyst layer" or a "second catalyst layer". In a case where the cathode separator 41 is an example of the first separator, the cathode catalyst layer 54 is an example of the first catalyst layer. On the other hand, in a case where the cathode separator 41 is an example of the second separator, the cathode catalyst layer 54 is an example of the second catalyst layer.

The material of the cathode catalyst layer 54 only need be a material that accelerates the above-described chemical reaction in the cathode chamber Sa, and various materials can be used. For example, the cathode catalyst layer 54 includes one or more of nickel, a nickel alloy, cerium oxide, lanthanum oxide, or platinum (Pt). Note that "○○ oxide" as used herein may include another material other than ○○ and oxygen. Note that the cathode catalyst layer 54 may contain another material such as carbon in addition to the above-described materials.

### Cathode Power Feeder

The cathode power feeder 55 is an electrical connection portion that transmits voltage applied to the cathode separator 41 to the cathode catalyst layer 54. The cathode power feeder 55 is disposed in the cathode chamber Sa. The cathode power feeder 55 is located between the first inner surface 41a of the cathode separator main body 410 and the cathode catalyst layer 54 and is in contact with both the first inner surface 41a of the cathode separator main body 410 and the cathode catalyst layer 54. That is, the cathode catalyst layer 54 is formed on a surface of the cathode power feeder 55, which faces the ion-exchange membrane 50 side. Hereinafter, for convenience of description, a surface of the cathode power feeder 55, which is in contact with the cathode catalyst layer 54, may be referred to as a "first cathode surface 55a", and a surface of the cathode power feeder 55, which is in contact with the cathode separator main body 410, may be referred to as a "second cathode surface 55b". The cathode power feeder 55 is an example of a "first power feeder" or a "second power feeder". In a case where the cathode separator 41 is an example of the first separator, the cathode power feeder 55 is an example of the first power feeder. On the other hand, in a case where the cathode separator 41 is an example of the second separator, the cathode power feeder 55 is an example of the second power feeder.

The cathode power feeder 55 has a structure through which the electrolyte Es and gas can pass. The cathode power feeder 55 is formed of, for example, a metallic mesh structural body, a sintered body, a fiber, a mesh structural body of conductive carbon fibers, a non-woven fabric, or the like. The cathode power feeder 55 has a predetermined void ratio. In the present embodiment, the outline size of the cathode power feeder 55 is the same as the outline size of the cathode catalyst layer 54. The cathode catalyst layer 54 and the cathode power feeder 55 form the cathode 47 of the electrolysis cell 11.

### Anode Catalyst Layer

The anode catalyst layer 56 is a layer (electrode catalyst layer) that accelerates the above-described chemical reaction in the anode chamber Sb. The anode catalyst layer 56 has, for example, a rectangular sheet shape. In the present embodiment, the outline size of the anode catalyst layer 56 is smaller than the outline size of the ion-exchange membrane 50, for example. The anode catalyst layer 56 is disposed in the anode chamber Sb and is provided on the second exchange membrane surface 50b of the ion-exchange membrane 50. The anode power feeder 57 described below is connected to the anode catalyst layer 56 from the side opposite to the ion-exchange membrane 50. The anode catalyst layer 56 to which a positive voltage is applied from the power supply unit 30 via the anode separator 42 and the anode power feeder 57 functions as a part of the anode 48 of the electrolysis cell 11. Note that the anode catalyst layer 56 is formed to have, for example, the same thickness as the cathode catalyst layer 54. The anode catalyst layer 56 is an example of the "first catalyst layer" or the "second catalyst layer". In a case where the anode separator 42 is an example of the first separator, the anode catalyst layer 56 is an example of the first catalyst layer. On the other hand, in a case where the anode separator 42 is an example of the second separator, the anode catalyst layer 56 is an example of the second catalyst layer.

The material of the anode catalyst layer 56 only need be a material that accelerates the above-described chemical reaction in the anode chamber Sb, and various materials can be used. For example, the anode catalyst layer 56 includes one or more of nickel, a nickel alloy, nickel oxide, copper oxide, iridium oxide, niobium oxide, lead oxide, or bismuth oxide. As described above, "XX oxide" as used herein may include another material other than XX and oxygen. For example, "nickel oxide" may contain another material such as iron (Fe) or cobalt (Co) in addition to nickel and oxygen. "Copper oxide" may contain another material such as cobalt in addition to copper (Cu) and oxygen. "Iridium oxide" may include another material such as ruthenium (Ru) in addition to iridium (Ir) and oxygen. "Lead oxide" may contain another material such as ruthenium in addition to lead (Pb) and oxygen. "Bismuth oxide" may contain another material such as ruthenium in addition to bismuth (Bi) and oxygen. Note that the anode catalyst layer 56 may contain another material such as carbon in addition to the above-described materials.

### Anode Power Feeder

The anode power feeder 57 is an electrical connection portion that transmits voltage applied to the anode separator 42 to the anode catalyst layer 56. The anode power feeder 57 is disposed in the anode chamber Sb. The anode power feeder 57 is located between the second inner surface 42a of the anode separator main body 420 and the anode catalyst layer 56 and is in contact with both the second inner surface 42a of the second separator and the anode catalyst layer 56. That is, the anode catalyst layer 56 is formed on a surface of the anode power feeder 57, which faces the ion-exchange membrane 50 side. Hereinafter, for convenience of description, a surface of the anode power feeder 57, which is in contact with the anode catalyst layer 56, may be referred to as a "first anode surface 57a", and a surface of the anode power feeder 57, which is in contact with the anode separator main body 420, may be referred to as a "second anode surface 57b". The anode power feeder 57 is an example of the "first power feeder" or the "second power feeder". In a case where the anode separator 42 is an example of the first separator, the anode power feeder 57 is an example of the first power feeder. On the other hand, in a case where the anode separator 42 is an example of the second separator, the anode power feeder 57 is an example of the second power feeder.

The anode power feeder 57 has a structure through which the electrolyte Es and gas can pass. The anode power feeder 57 is formed of, for example, a metallic mesh structural body, a sintered body, a fiber, a mesh structural body of conductive carbon fibers, a non-woven fabric, or the like. The anode power feeder 57 has a predetermined void ratio. In the present embodiment, the anode power feeder 57 has, for example, the same void ratio as the void ratio of the cathode power feeder 55. In the present embodiment, the outline size of the anode power feeder 57 is the same as the outline size of the anode catalyst layer 56. The anode catalyst layer 56 and the anode power feeder 57 form the anode 48 of the electrolysis cell 11.

FIG. 3 is an exploded perspective view schematically illustrating the electrolysis cell 11. In addition to the above-described configuration, the electrolysis cell 11 further includes, for example, the first current collector 61, the second current collector 62, a first insulator 63, a second insulator 64, a first insulating material 65, a second insulating material 66, a first end flange 67, and a second end flange 68. Note that in FIG. 3, for convenience of illustration, a support part 70 and a sealing part 80, which will be described below, are not illustrated.

### First Current Collector

The first current collector 61 is an electrical connection portion that transmits a negative voltage applied from the power supply unit 30 to the cathode separator 41. The first current collector 61 is a metallic plate member (for example, a copper plate). The first current collector 61 is, for example, in contact with the cathode separator 41 from a side opposite to the accommodation space S (see FIG. 2) of the electrolysis cell 11 and is electrically connected to the cathode separator 41. A negative voltage required for the electrolyzation in the electrolysis cell 11 is applied to the first current collector 61 from the power supply unit 30. Note that the first current collector 61 may be shared by two adjacent electrolysis cells 11 in the electrolysis cell stack 10.

### Second Current Collector

The second current collector 62 is an electrical connection portion that transmits a positive voltage applied from the power supply unit 30 to the anode separator 42. The second current collector 62 is a metallic plate member (for example, a copper plate). The second current collector 62 is, for example, in contact with the anode separator 42 from a side opposite to the accommodation space S (see FIG. 2) of the electrolysis cell 11 and is electrically connected to the anode separator 42. A positive voltage required for the electrolyzation in the electrolysis cell 11 is applied to the second current collector 62 from the power supply unit 30. Note that the second current collector 62 may be shared by two adjacent electrolysis cells 11 in the electrolysis cell stack 10.

### First Insulator

The first insulator 63 is a member that insulates between an outer peripheral portion of the anode separator 42 and an outer peripheral portion of the cathode separator 41. The first insulator 63 is a frame-shaped sheet member that is slightly larger than the outer shape of the cathode catalyst layer 54 and the outer shape of the cathode power feeder 55. The first insulator 63 is attached to the first inner surface 41a of the cathode separator main body 410 and covers the end portion of the first inner surface 41a (see FIG. 4). The material of the first insulator 63 is not particularly limited as long as it is an insulating material and is, for example, a sheet-shaped resin such as PTFE.

### Second Insulator

Similarly to the first insulator 63, the second insulator 64 is a member that insulates between the outer peripheral portion of the cathode separator 41 and the outer peripheral portion of the anode separator 42. The second insulator 64 is a frame-shaped sheet member that is slightly larger than the outer shape of the anode catalyst layer 56 and the outer shape of the anode power feeder 57. The second insulator 64 is attached to the second inner surface 42a of the anode separator main body 420 and covers the end portion of the second inner surface 42a (see FIG. 4). The material of the second insulator 64 is not particularly limited as long as it is an insulating material and is, for example, a sheet-shaped resin such as PTFE. Further, the first insulator 63 and the second insulator 64 may be an integrated insulator.

### First Insulating Material

The first insulating material 65 in FIG. 3 is located between the first current collector 61 and the first end flange 67. The outline size of the first insulating material 65 is, for example, the same as or larger than the outline size of the first current collector 61.

### Second Insulating Material

The second insulating material 66 in FIG. 3 is located between the second current collector 62 and the second end flange 68. The outline size of the second insulating material 66 is, for example, the same as or larger than the outline size of the second current collector 62.

### First End Flange

The first end flange 67 in FIG. 3 is located on a side opposite to the first insulating material 65 with respect to the accommodation space S (see FIG. 2) of the electrolysis cell 11. The first end flange 67 is formed of, for example, a metallic plate member (for example, a stainless steel plate). For example, the outline size of the first end flange 67 is larger than the outline size of the first insulating material 65.

### Second End Flange

The second end flange 68 in FIG. 3 is located on a side opposite to the second insulating material 66 with respect to the accommodation space S (see FIG. 2) of the electrolysis cell 11. The second end flange 68 is formed of, for example, a metallic plate member (for example, a stainless steel plate). For example, the outline size of the second end flange 68 is larger than the outline size of the second insulating material 66.

Note that the electrolysis cell 11 is not limited to the above-described configuration. For example, in a case where the plurality of electrolysis cells 11 are arranged side by side in the electrolysis cell stack 10, two adjacent electrolysis cells 11 out of the plurality of electrolysis cells 11 may share the cathode separator 41 or the anode separator 42 which is a bipolar plate. In this case, the current collector (the first current collector 61 or the second current collector 62), the insulator (the first insulator 63 or the second insulator 64), the insulating material (the first insulating material 65 or the second insulating material 66), and the end flange (the first end flange 67 or the second end flange 68) may not be present between the two adjacent electrolysis cells 11.

### Structure of Outer Peripheral Portion of Electrolysis Cell

FIG. 4 is a cross-sectional view illustrating the electrolysis cell 11. In the present embodiment, the outline size of the ion-exchange membrane 50 is larger than each of the outline size of the cathode catalyst layer 54 and the outline size of the cathode power feeder 55. In other words, the area of the ion-exchange membrane 50 is larger than each of the area of the cathode catalyst layer 54 and the area of the cathode power feeder 55. The ion-exchange membrane 50 protrudes to the outside (outer peripheral side) of the cathode catalyst layer 54 and the cathode power feeder 55 in a direction (e.g., the X direction or the Y direction) orthogonal to the thickness direction (the Z direction) of the membrane electrode assembly 43. In the present specification, the "outer side" or "outer peripheral side" means a side away from the central portion C of the membrane electrode assembly 43 in a direction (e.g., the X direction or the Y direction) orthogonal to the thickness direction (the Z direction) of the membrane electrode assembly 43.

As illustrated in FIG. 4, in addition to the configuration described above, the electrolysis cell 11 includes, for example, the support part 70 and the sealing part 80. The support part 70 is a member that supports the membrane electrode assembly 43 inside the electrolysis cell 11 (specifically, between the cathode separator 41 and the anode separator 42). The sealing part 80 is a member that closes the accommodation space S between the cathode separator 41 and the anode separator 42 from the outer peripheral side. Hereinafter, the support part 70 and the sealing part 80 will be described.

### Support Part

The support part 70 is disposed between the cathode separator 41 and the anode separator 42. The support part 70 is located on an inner side (inner peripheral side) from an outer edge portion 50e of the ion-exchange membrane 50 and supports the ion-exchange membrane 50. The "outer edge portion 50e" as used herein means an edge portion away from the central portion C of the membrane electrode assembly 43 in a direction (e.g., the X direction or the Y direction) orthogonal to the thickness direction (the Z direction) of the membrane electrode assembly 43. The "inner side" or "inner peripheral side" as used herein means an inner side as viewed from the central portion C of the membrane electrode assembly 43 (side close to the central portion C). In the present embodiment, the support part 70 includes a first support part 71 and a second support part 72. The first support part 71 is the support part 70 on the cathode 47 side, and is disposed between the first inner surface 41a of the cathode separator main body 410 and the first exchange membrane surface 50a the ion-exchange membrane 50. The first support part 71 is located on an inner side (inner peripheral side) from the outer edge portion 50e of the ion-exchange membrane 50. The first support part 71 is sandwiched between the first inner surface 41a (or the first insulator 63) and the first exchange membrane surface 50a at a position on the outer side (outer peripheral side) from the cathode 47, and supports the ion-exchange membrane 50 with respect to the first inner surface 41a. The second support part 72 is the support part 70 on the anode 48 side, and is disposed between the second inner surface 42a of the anode separator main body 420 and the second exchange membrane surface 50b of the ion-exchange membrane 50. The second support part 72 is located on an inner side (inner peripheral side) from the outer edge portion 50e of the ion-exchange membrane 50. The second support part 72 is sandwiched between the second inner surface 42a and the second exchange membrane surface 50b at a position on the outer side (outer peripheral side) from the anode 48, and supports the ion-exchange membrane 50 with respect to the second inner surface 42a. The first support part 71 and the second support part 72 each are formed in an annular shape (for example, a frame shape) along the outer edge portion 50e of the ion-exchange membrane 50 and the annular shape is slightly smaller than the outer edge portion 50e of the ion-exchange membrane 50.

### Sealing Part

The sealing part 80 is disposed between the cathode separator 41 and the anode separator 42. The sealing part 80 is located on an outer side (outer peripheral side) from the outer edge portion 50e of the ion-exchange membrane 50 and seals the accommodation space S of the electrolysis cell 11. In the present embodiment, the sealing part 80 includes a first sealing part 81 and a second sealing part 82. However, the first sealing part 81 and the second sealing part 82 may be integrally formed. That is, the first sealing part 81 and the second sealing part 82 may be a single member. Further, the sealing part 80 may be formed integrally with the first insulator 63 and/or the second insulator 64 described above. The first sealing part 81 is the sealing part 80 on the cathode 47 side. The first sealing part 81 is located on an outer side (outer peripheral side) from the outer edge portion 50e of the ion-exchange membrane 50. The first sealing part 81 is sandwiched between the first inner surface 41a of the cathode separator main body 410 and the second sealing part 82 and seals a part of an outer peripheral side of the accommodation space S. In the present embodiment, the first sealing part 81 is sandwiched between the first insulator 63 attached to the first inner surface 41a and the second sealing part 82. The second sealing part 82 is the sealing part 80 on the anode 48 side. The second sealing part 82 is located on an outer side from the outer edge portion 50e of the ion-exchange membrane 50. The second sealing part 82 is sandwiched between the second inner surface 42a of the anode separator main body 420 and the first sealing part 81 and seals a part of the outer peripheral side of the accommodation space S. In the present embodiment, the second sealing part 82 is sandwiched between the second insulator 64 attached to the second inner surface 42a and the first sealing part 81. The first sealing part 81 and the second sealing part 82 each are formed in an annular shape (for example, a frame shape) along the outer edge portion 50e of the ion-exchange membrane 50 and the annular shape is slightly larger than the outer edge portion 50e of the ion-exchange membrane 50. The sealing part 80 prevents leakage of the electrolyte Es or the like from the accommodation space S to the outside of the electrolysis cell 11.

The electrolysis cell 11 further includes a flow direction changing part 44 in addition to the above-described configuration. FIG. 5 is a view of the second inner surface 42a of the anode separator main body 420 viewed from the direction of line V-V in FIGS. 2 and 4. FIG. 6 is a cross-sectional view of the anode separator main body 420, the flow direction changing part 44, the anode power feeder 57, the anode catalyst layer 56, and the ion-exchange membrane 50 taken along line VI-VI in FIG. 5. FIGS. 5 and 6 are views for explaining the flow direction changing part 44. Although the flow direction changing part 44 disposed inside the groove 40d of the anode separator main body 420 will be described below with reference to FIGS. 5 and 6, the flow direction changing part 44 disposed inside the groove 40d of the cathode separator main body 410 has the same configuration. Thus, description of the flow direction changing part 44 disposed inside the groove 40d of the cathode separator main body 410 may be omitted.

### Flow Direction Changing Part

In the present embodiment, the flow direction changing part 44 is provided as a part of the anode separator 42, and changes the flow direction of at least a portion of the electrolyte Es flowing in the first direction D1 along the second inner surface 42a to the second direction D2 intersecting (orthogonal to) the second inner surface 42a at each of a plurality of positions in the first direction D1.

As illustrated in FIGS. 5 and 6, in the present embodiment, the flow direction changing part 44 is disposed inside each groove 40d formed in the anode separator main body 420. The flow direction changing part 44 includes a plurality of protrusions 440 protruding from the anode separator main body 420 toward the ion-exchange membrane 50. Each protrusion 440 protrudes from a groove bottom surface 40s inside the groove 40d toward the ion-exchange membrane 50. The plurality of protrusions 440 are disposed separately from each other in the first direction D1. In the present embodiment, the plurality of protrusions 440 are arranged at equal intervals in the first direction D1. The dimension of each protrusion 440 in the first direction D1 is equal to the interval between the protrusions 440 adjacent to each other in the first direction D1. That is, dimensions Lw1 and Lw2 illustrated in FIG. 6 are equal to each other. Note that the plurality of protrusions 440 are formed by, for example, pressing the anode separator 42.

Hereinafter, for convenience of description, the plurality of grooves 40d adjacent to each other in the third direction D3 illustrated in FIG. 5 are distinguished and referred to as two of a "first groove 40d1" and a "second groove 40d2" adjacent to the first groove 40d1 in the third direction D3. The first groove 40d1 and the second groove 40d2 are alternately repeated in the third direction D3. The flow path FP of the electrolyte Es defined by the first groove 40d1 is referred to as a "first flow path FP1", and the flow path FP of the electrolyte Es defined by the second groove 40d2 is referred to as a "second flow path FP2". The plurality of protrusions 440 arranged in the first direction D1 inside the first groove 40d1 are referred to as "first protrusions 441", and the plurality of protrusions 440 arranged in the first direction D1 inside the second groove 40d2 are referred to as "second protrusions 442". Two portions of the anode separator main body 420 that are disposed on both sides of the first groove 40d1 will be referred to as a "first portion 40p1" and a "second portion 40p2". Thus, the first portion 40p1 and the second portion 40p2 are alternately repeated in the third direction D3. At the same time, the first portion 40p1 and the second portion 40p2 are disposed separately on both sides of the second groove 40d2. The first portion 40p1 and the second portion 40p2 include the second inner surface 42a of the anode separator main body 420.

As illustrated in FIG. 6, each of the first protrusions 441 includes a changing part 44s formed in such a manner that the protruding amount from the anode separator main body 420 gradually increases inside the first groove 40d1 toward a downstream side D1d in the first direction D1, and a connection portion 44t connecting the changing part 44s and the anode separator main body 420. In the present embodiment, the surface of the first protrusion 441 is formed of the changing part 44s and the connection portion 44t. In the present embodiment, the changing part 44s is an inclined surface that is connected to the groove bottom surface 40s and rises toward the ion-exchange membrane 50 at a predetermined angle with respect to the groove bottom surface 40s. The changing part 44s serving as the inclined surface is formed to form an angle of 10° or more and 60° or less with respect to the groove bottom surface 40s, for example. More preferably, the changing part 44s serving as the inclined surface is formed to form an angle of 30° or more and 45° or less with respect to the groove bottom surface 40s.

The connection portion 44t is a surface that connects an end portion (upper end) of the changing part 44s and the groove bottom surface 40s, and faces the downstream side D1d in the first direction D1. For example, the connection portion 44t is formed to be perpendicular to the groove bottom surface 40s. Thus, each of the first protrusions 441 has a right-angled triangular shape in a cross-sectional view seen in the third direction D3.

In the present embodiment, the protruding height (dimension Lh2 illustrated in FIG. 6) of each of the first protrusions 441 is smaller than the depth (dimension Lh1 illustrated in FIG. 6) of the first groove 40d1. That is, the first portion 40p1 and the second portion 40p2 are in contact with the anode power feeder 57 in a state in which the plurality of first protrusions 441 are separated from the anode power feeder 57. To be specific, the second inner surface 42a of the first portion 40p1 and the second inner surface 42a of the second portion 40p2 are in contact with the second anode surface 57b of the anode power feeder 57 in a state of being separated from the end portion (upper end) of the changing part 44s of the first protrusion 441. The second protrusion 442 disposed inside the second groove 40d2 (second flow path FP2) also has the same configuration as the first protrusion 441 disposed inside the first groove 40d1 (first flow path FP1) described above, and thus, the description thereof will be omitted. In the present embodiment, the second protrusion 442 is disposed at a position adjacent to the first protrusion 441 in the third direction D3 (see FIG. 5).

FIG. 7 is a cross-sectional view of each of the anode separator main body 420, the flow direction changing part 44 (a part of the anode separator 42), the membrane electrode assembly 43, the flow direction changing part 44 (a part of the cathode separator 41), and the cathode separator main body 410, and corresponds to the portion illustrated in FIG. 6. As illustrated in FIG. 7, the flow direction changing part 44 described above is also disposed inside the groove 40d of the cathode separator main body 410. In the present embodiment, the protrusions 440 disposed inside the groove 40d of the cathode separator main body 410 are aligned with the protrusions 440 disposed inside the groove 40d of the anode separator main body 420 in the second direction D2. Note that the protrusions 440 disposed inside the groove 40d of the cathode separator main body 410 need not be aligned with the protrusions 440 disposed inside the anode separator main body 420 in the second direction D2 (for example, may be disposed in a staggered manner with respect to the first direction D1).

### Operational Effects

As a comparative example, a configuration of the electrolysis cell 11 that does not include the flow direction changing part 44 will be considered. In such a configuration, the cathode catalyst layer 54 is provided on the first exchange membrane surface 50a of the ion-exchange membrane 50, and the anode catalyst layer 56 is provided on the second exchange membrane surface 50b of the ion-exchange membrane 50. The cathode power feeder 55 is provided on the side of the cathode catalyst layer 54 opposite to the ion-exchange membrane 50, and the anode power feeder 57 is provided on the side of the anode catalyst layer 56 opposite to the ion-exchange membrane 50. When the electrolyte Es is supplied from the outside to the respective electrode catalyst layers (the cathode catalyst layer 54 and the anode catalyst layer 56) via the cathode power feeder 55 and the anode power feeder 57, a concentration gradient of hydroxide ions may occur between the cathode catalyst layer 54 and the anode catalyst layer 56 with the ion-exchange membrane 50 interposed therebetween. Due to the concentration gradient of hydroxide ions, a potential difference based on the Donnan effect is generated between the cathode catalyst layer 54 and the anode catalyst layer 56, and as a result, the electrolysis efficiency may decrease.

On the other hand, in the present embodiment, the electrolysis cell 11 includes the flow direction changing part 44 that changes the flow direction (electrolyte flow Es2 illustrated in FIG. 6) of at least a portion of the electrolyte Es flowing in the first direction D1 along the first inner surface 41a and the second inner surface 42a to the second direction D2 (electrolyte flow Es1 illustrated in FIG. 6) orthogonal to the first inner surface 41a and the second inner surface 42a at each of a plurality of positions in the first direction D1. According to such a configuration, at least a portion of the electrolyte Es flowing in the first direction D1 is guided by the flow direction changing part 44 to flow in the second direction D2 toward the cathode catalyst layer 54 and the anode catalyst layer 56. This diffuses the guided electrolyte Es to replace the electrolyte Es electrolyzed in the vicinity of the cathode catalyst layer 54 and the anode catalyst layer 56 inside the cathode power feeder 55 and the anode power feeder 57. This makes it possible to suppress retention of the electrolyte Es in the vicinity of the cathode catalyst layer 54 and the anode catalyst layer 56. Thus, generation of the concentration gradient of hydroxide ions between the cathode catalyst layer 54 and the anode catalyst layer 56 can be suppressed, and as a result, generation of the potential difference based on the Donnan effect between the cathode catalyst layer 54 and the anode catalyst layer 56 can be suppressed, whereby it is possible to suppress the reduction in electrolysis efficiency of the electrolysis cell 11.

Furthermore, in the present embodiment, the flow direction changing part 44 includes the plurality of protrusions 440 (the first protrusion 441 and the second protrusion 442) disposed inside the grooves 40d (the first groove 40d1 and the second groove 40d2), and each of the protrusions 440 includes the inclined surface (the changing part 44s) inclined in such a manner that the protruding amount from the separator main body (the cathode separator main body 410 and the anode separator main body 420) gradually increases toward the downstream side D1d in the first direction D1. This can flow at least a portion of the electrolyte Es flowing through the flow path FP (the first flow path FP1 and the second flow path FP2) in the first direction D1 toward the second direction D2 with a simple configuration in which the inclined surface is provided inside the groove 40d.

Further, in the electrolysis cell 11, bubbles (bubbles B illustrated in FIGS. 6 and 7) are generated in association with electrolytic reduction. Specifically, bubbles containing hydrogen are generated on the cathode 47 side (between the cathode separator 41 and the ion-exchange membrane 50), and bubbles containing oxygen are generated on the anode 48 side (between the anode separator 42 and the ion-exchange membrane 50). At least some of the bubbles generated in the vicinity of the cathode catalyst layer 54 and the anode catalyst layer 56 in association with the electrolytic reduction may pass through the cathode power feeder 55 and the anode power feeder 57 in the second direction D2 and move to the flow path FP (the first flow path FP1 and the second flow path FP2) defined by the grooves 40d (the first groove 40d1 and the second groove 40d2).

In the present embodiment, each of the cathode separator main body 410 and the anode separator main body 420 has the first portion 40p1 and the second portion 40p2 disposed separately on both sides of each of the plurality of grooves 40d arranged in the third direction D3 intersecting the first direction D1 (see FIG. 5). The protruding height of each of the protrusions 440 (the first protrusion 441 and the second protrusion 442) disposed inside the grooves 40d is smaller than the depth of the grooves 40d (see FIGS. 6 and 7). That is, the first portion 40p1 and the second portion 40p2 are in contact with the power feeders (the cathode power feeder 55 and the anode power feeder 57) in a state in which the plurality of protrusions 440 are separated from the power feeders. Thus, between each of the plurality of protrusions 440 and the power feeders, there is a gap. This allows at least some of the bubbles having moved to the flow path FP to flow in the first direction D1 while passing through the gap between the protrusion 440 and the power feeder in accordance with the flow of the electrolyte Es (for example, the electrolyte flow Es2 illustrated in FIG. 6). Thus, bubbles such as hydrogen or oxygen generated in association with the electrolytic reduction can be efficiently recovered without being retained in the flow path FP.

In addition, the present inventors have found that in a pressure environment (for example, under the atmospheric pressure) during operation of the electrolysis cell 11 in the present embodiment, the average size (average bubble diameter) of bubbles generated in association with electrolytic reduction are 0.3 mm or more and 0.5 mm or less. In the present embodiment, the protrusions 440 are formed in such a manner that the dimension in the second direction D2 of the gap formed between each of the plurality of protrusions 440 and the power feeder is larger than 0.3 mm. Preferably, the protrusions 440 are formed in such a manner that the dimension in the second direction D2 of the gap formed between each of the plurality of protrusions 440 and the power feeder is larger than 0.5 mm. Accordingly, at least some of the bubbles having moved to the flow path FP more easily pass through the gaps between the protrusions 440 and the power feeder in the first direction D1 in accordance with the flow of the electrolyte Es (for example, the electrolyte flow Es2 illustrated in FIG. 6). This can achieve the above action with higher accuracy.

### Second Embodiment of Electrolyzer

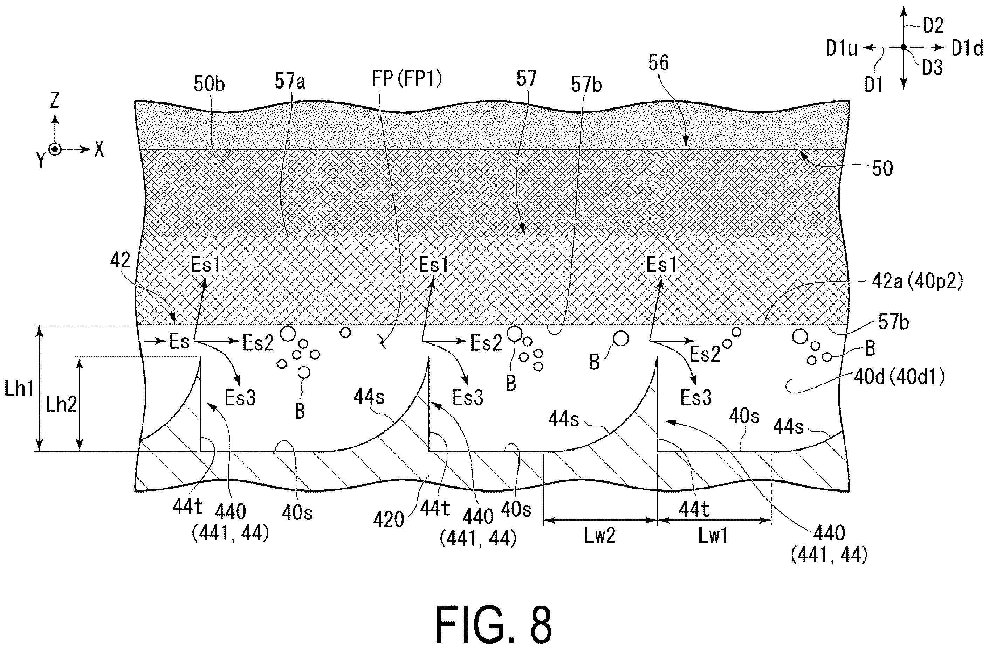

Next, a second embodiment of the electrolyzer 1 will be described with reference to FIG. 8. FIG. 8 is a cross-sectional view of each of the anode separator main body 420, the flow direction changing part 44, the anode power feeder 57, the anode catalyst layer 56, and the ion-exchange membrane 50, and corresponds to the portion illustrated in FIG. 6. In the present embodiment, the shape of the changing part 44s of each of the protrusions 440 (the first protrusion 441 and the second protrusion 442) disposed inside the grooves 40d (the first groove 40d1 and the second groove 40d2) is different from the shape of the changing part 44s of each of the protrusions 440 described in the first embodiment.

In the present embodiment, the changing part 44s is connected to the groove bottom surface 40s, and rises to face the upstream side D1u in the flow direction of the electrolyte Es (the first direction D1) as it goes toward the downstream side D1d in the first direction D1. The changing part 44s is, for example, a cylindrical surface formed in an arc shape having a predetermined radius of curvature in a cross-sectional view seen in the third direction D3. Note that the changing part 44s is not limited to a cylindrical surface, and only need be a surface that rises toward the upstream side D1u in the flow direction of the electrolyte Es (the first direction D1) as it goes toward the downstream side D1d in the first direction D1.

### Operational Effects

With the above configuration as well, the same action as that of the configuration described in the first embodiment can be achieved. In the present embodiment, as compared with the case where the protrusion 440 is an inclined surface as described in the first embodiment, at least a portion of the electrolyte Es flowing through the flow path FP in the first direction D1 is guided in a direction having a steeper inclination with respect to the first exchange membrane surface 50a or the second exchange membrane surface 50b of the ion-exchange membrane 50 (electrolyte flow Es1 illustrated in FIG. 8). Accordingly, the electrolyte Es guided by the flow direction changing part 44 can further diffuse the electrolyte Es electrolyzed in the vicinity of the cathode catalyst layer 54 and the anode catalyst layer 56 inside the cathode power feeder 55 and the anode power feeder 57.

### Third Embodiment of Electrolyzer

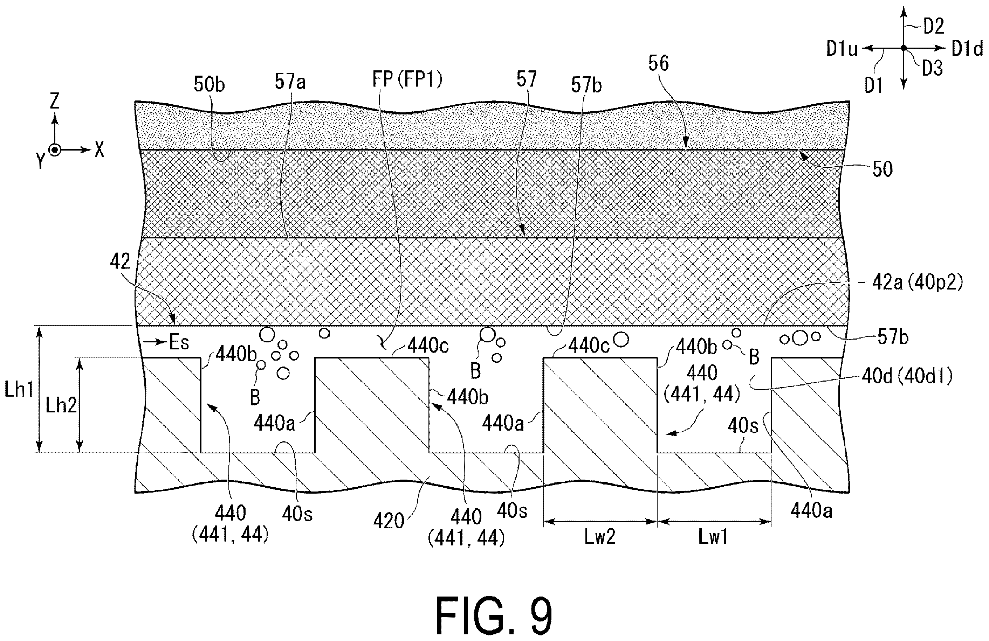

Next, a third embodiment of the electrolyzer 1 will be described with reference to FIG. 9. FIG. 9 is a cross-sectional view of each of the anode separator main body 420, the flow direction changing part 44, the anode power feeder 57, the anode catalyst layer 56, and the ion-exchange membrane 50, and corresponds to the portion illustrated in FIG. 6. In the present embodiment, the shape of each of the protrusions 440 (the first protrusion 441 and the second protrusion 442) disposed inside the grooves 40d (the first groove 40d1 and the second groove 40d2) is different from the shape of each of the protrusions 440 described in the first embodiment.

In the present embodiment, each of the first protrusions 441 disposed inside the first groove 40d1 is formed to rise from the groove bottom surface 40s in the second direction D2 (the ion-exchange membrane 50 side). Each of the first protrusions 441 is formed in, for example, a rectangular shape (or a trapezoidal shape) in a cross-sectional view seen in the third direction D3. The first protrusion 441 includes an upstream surface 440a facing the upstream side D1u in the flow direction (first direction D1) of the electrolyte Es in the first flow path FP1, a downstream surface 440b facing the side (the downstream side D1d in the flow direction (first direction D1) of the electrolyte Es) opposite to the upstream surface 440a, and a connection surface 440c connecting the upstream surface 440a and the downstream surface 440b in the first direction D1. The connection surface 440c faces the second direction D2 (the ion-exchange membrane 50 side). In the present embodiment, the upstream surface 440a, the downstream surface 440b, and the connection surface 440c constitute the surfaces of the first protrusion 441. The second protrusion 442 disposed inside the second groove 40d2 (second flow path FP2) also has the same configuration as the first protrusion 441 disposed inside the first groove 40d1 (first flow path FP1) described above, and thus, the description thereof will be omitted. The flow direction changing part 44 disposed inside the groove 40d formed in the cathode separator main body 410 also has the same configuration, and thus, the description thereof will be omitted.

### Operational Effects

According to the above configuration, at least a portion of the electrolyte Es flowing through the flow path FP in the first direction D1 hits the upstream surface 440a of the protrusion 440 from the upstream side D1u in the first direction D1, and is guided to the second direction D2. That is, the electrolyte Es that has hit the upstream surface 440a is guided to a direction perpendicular to the first exchange membrane surface 50a or the second exchange membrane surface 50b of the ion-exchange membrane 50. Thus, the same action as that described in the first embodiment can be achieved. In addition, as compared with the protrusions 440 described in the first embodiment, the protrusions 440 can be more easily formed inside the groove 40d.

### Fourth Embodiment of Electrolyzer

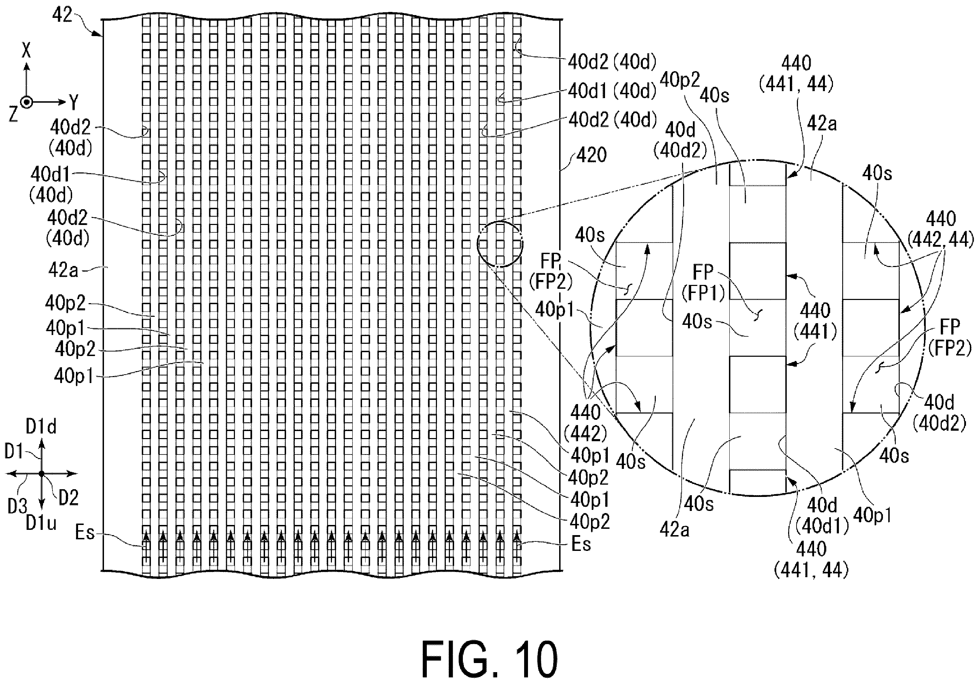

Next, a fourth embodiment of the electrolyzer 1 will be described with reference to FIG. 10. FIG. 10 is a diagram of the second inner surface 42a of the anode separator main body 420, and corresponds to the portion illustrated in FIG. 5. In the present embodiment, the positional relationship between the protrusions 440 disposed inside the first groove 40d1 and inside the second groove 40d2 is different from that in the first embodiment, the second embodiment, and the third embodiment.

As illustrated in FIG. 10, in the present embodiment, the plurality of first protrusions 441 disposed inside each of the first grooves 40d1 and the plurality of second protrusions 442 disposed inside each of the second grooves 40d2 are arranged in a staggered manner with respect to the first direction D1. That is, in the present embodiment, the second protrusion 442 is not disposed at a position inside the second groove 40d2 (second flow path FP2) adjacent to each first protrusion 441 disposed inside the first groove 40d1 (first flow path FP1) in the third direction D3. At the same time, the first protrusion 441 is not disposed at a position inside the first groove 40d1 (first flow path FP1) adjacent to each second protrusion 442 disposed inside the second groove 40d2 (second flow path FP2) in the third direction D3. That is, at least two protrusions 440 included in the plurality of first protrusions 441 and at least two protrusions 440 included in the plurality of second protrusions 442 are arranged in a staggered manner with respect to the first direction D1. The flow direction changing part 44 disposed inside the groove 40d formed in the cathode separator main body 410 also has the same configuration, and thus, the description thereof will be omitted.

### Operational Effects

Of the electrolyte Es flowing in the first flow path FP1, the electrolyte Es whose flow direction has changed to the second direction D2 by hitting the first protrusion 441 passes through the inside of the cathode power feeder 55 and the inside of the anode power feeder 57 while flowing in the first direction D1, climbs over the first portion 40p1 and the second portion 40p2 in the third direction D3, and then flows into the second flow path FP2. Similarly, of the electrolyte Es flowing in the second flow path FP2, the electrolyte Es whose flow direction has changed to the second direction D2 by hitting the second protrusion 442 passes through the inside of the cathode power feeder 55 and the anode power feeder 57 while flowing in the first direction D1, climbs over the first portion 40p1 and the second portion 40p2 in the third direction D3, and then flows into the first flow path FP1. According to the above configuration, at least a portion of the electrolyte Es having flowed from the first flow path FP1 into the second flow path FP2 easily hits the second protrusion 442, and thus the flow direction of the electrolyte Es having hit the second protrusion 442 changes to the second direction D2 also in the second flow path FP2. In addition, at least a portion of the electrolyte Es having flowed from the second flow path FP2 into the first flow path FP1 easily hits the first protrusion 441, and thus the flow direction of the electrolyte Es having hit the first protrusion 441 changes to the second direction D2 also in the first flow path FP1. Accordingly, for example, as compared with the case where the first protrusions 441 and the second protrusions 442 are not arranged in a staggered manner with respect to the first direction D1, the electrolyte Es guided by the flow direction changing part 44 can further diffuse the electrolyte Es electrolyzed in the vicinity of the cathode catalyst layer 54 and the anode catalyst layer 56 in the cathode power feeder 55 and the anode power feeder 57.

### Fifth Embodiment of Electrolyzer

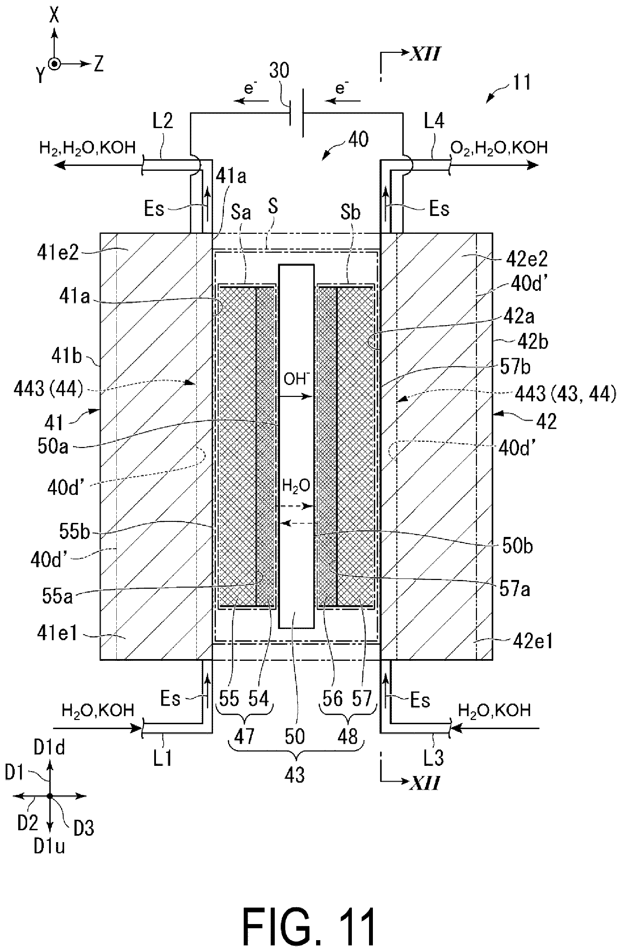

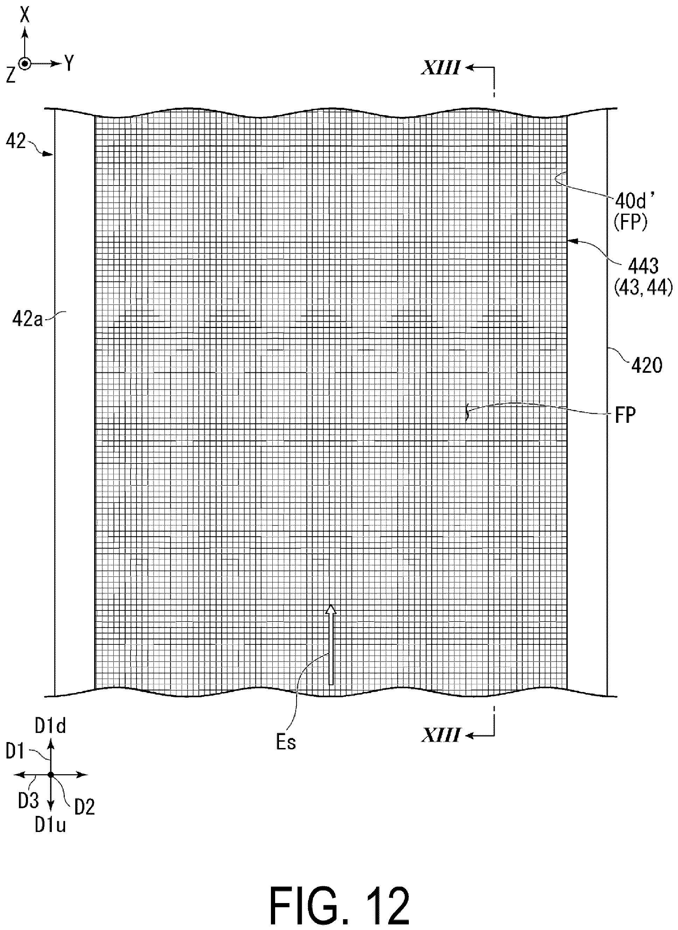

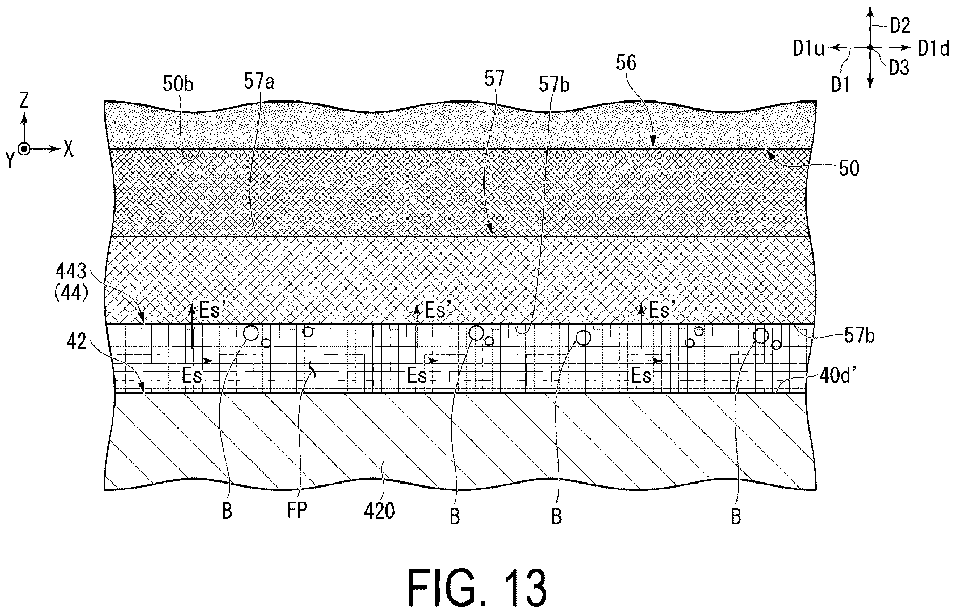

Next, a fifth embodiment of the electrolyzer 1 will be described below with reference to FIGS. 11 to 13. FIG. 11 is a view schematically illustrating the electrolysis cell 11, and corresponds to the portion illustrated in FIG. 2. FIG. 12 is a view of the second inner surface 42a of the anode separator main body 420 viewed from the direction of line XII-XII in FIG. 11. FIG. 13 is a cross-sectional view of each of the anode separator main body 420, the flow direction changing part 44, the anode power feeder 57, the anode catalyst layer 56, and the ion-exchange membrane 50 viewed from the direction of line XIII-XIII in FIG. 12. In the fifth embodiment, the configuration of the flow path FP provided in the anode separator main body 420 and the cathode separator main body 410 and the configuration of the flow direction changing part 44 are different from the configurations of the flow path FP and the flow direction changing part 44 described in the first embodiment.

As illustrated in FIG. 11, a recessed portion 40d' for flowing the electrolyte Es supplied from the piping line L1 toward the piping line L2 is formed in the first inner surface 41a of the cathode separator main body 410. The recessed portion 40d' formed in the cathode separator main body 410 is provided to be recessed from the first inner surface 41a in the second direction D2, for example. Similarly, a recessed portion 40d' for flowing the electrolyte Es supplied from the piping line L3 toward the piping line L4 is formed in the second inner surface 42a of the anode separator main body 420. The recessed portion 40d' formed in the anode separator main body 420 is provided to be recessed from the second inner surface 42a in the second direction D2, for example. The first inner surface 41a and the second inner surface 42a are examples of the "first surface" or the "second surface". In a case where the cathode separator 41 is an example of the first separator, the first inner surface 41a is an example of the first surface. On the other hand, in a case where the cathode separator 41 is an example of the second separator, the first inner surface 41a is an example of the second surface. In a case where the anode separator 42 is an example of the first separator, the second inner surface 42a is an example of the first surface. On the other hand, in a case where the anode separator 42 is an example of the second separator, the second inner surface 42a is an example of the second surface.

As illustrated in FIGS. 12 and 13, the flow direction changing part 44 is disposed in the recessed portion 40d' formed in the anode separator main body 420. The flow direction changing part 44 changes the flow direction of at least a portion of the electrolyte Es flowing in the first direction D1 along the second inner surface 42a to the second direction D2 at each of a plurality of positions in the first direction D1. In the present embodiment, the flow direction changing part 44 is a flow path forming member 443 for forming the flow path FP of the electrolyte Es supplied into the recessed portion 40d'. That is, the flow path forming member 443 is provided between the anode separator main body 420 and the anode power feeder 57. The flow path forming member 443 is a mesh structural body. Specifically, the mesh structural body is formed by stacking a plurality of sheets such as expanded metal sheets or grating sheets. The flow path forming member 443 has conductivity, and electrically connects the anode separator main body 420 and the anode power feeder 57. The void ratio of the mesh structural body is larger than the void ratio of each of the anode power feeder 57 and the cathode power feeder 55.

The electrolyte Es supplied into the recessed portion 40d' flows inside the flow path forming member 443 in the first direction D1. At this time, the electrolyte Es flowing inside the flow path forming member 443 receives resistance from the flow path forming member 443. Hereinafter, the resistance that the electrolyte Es flowing inside the flow path forming member 443 receives from the flow path forming member 443 is referred to as "flow path resistance of the flow path forming member 443". In the present embodiment, openings of a plurality of holes included in the mesh structural body face the second direction D2. Accordingly, in the flow path FP, the flow path resistance of the flow path forming member 443 that the electrolyte Es receives in the second direction D2 is smaller than the flow path resistance of the flow path forming member 443 that the electrolyte Es receives in the first direction D1. Similarly, the flow direction changing part 44 is also disposed in the recessed portion 40d' formed in the cathode separator main body 410. The flow direction changing part 44 (the flow path forming member 443) has the same configuration as that of the flow direction changing part 44 disposed in the recessed portion 40d' of the anode separator main body 420, and thus description thereof will be omitted.

### Operational Effects

According to the above configuration, the flow path forming member 443 as the flow direction changing part 44 is a mesh structural body, and thus a portion of the electrolyte Es flowing inside the flow path forming member 443 flows to the second direction D2. That is, the flow direction changing part 44 changes the flow direction of at least a portion of the electrolyte Es flowing in the first direction D1 (electrolyte flow Es' illustrated in FIG. 13) to the second direction D2 (electrolyte flow Es' illustrated in FIG. 13) at each of a plurality of positions in the first direction D1. Accordingly, at least a portion of the electrolyte Es flowing in the first direction D1 is guided by the flow direction changing part 44 to flow in the second direction D2 toward the cathode catalyst layer 54 and the anode catalyst layer 56, and thus the guided electrolyte Es diffuses to replace the electrolyte Es electrolyzed in the vicinity of the cathode catalyst layer 54 and the anode catalyst layer 56. Thus, the same action as that described in the first embodiment can be achieved.

### Other Embodiments

Although the embodiments of the present disclosure have been described above in detail with reference to the drawings, specific configurations are not limited to the configurations of the embodiments, and additions, omissions, substitutions, and other modifications of the configurations can be made without departing from the gist of the present disclosure.

For example, the surface of each of the protrusions 440 described in the first to fourth embodiments may be subjected to water-repellent surface treatment (for example, plating). This makes it easy for the electrolyte Es flowing through the flow path FP to be repelled from the surfaces of the protrusions 440. Thus, the electrolyte Es flowing through the flow path FP can be more smoothly guided to the second direction D2 (the ion-exchange membrane 50 side). Note that the water-repellent surface treatment may also be applied to the groove bottom surface 40s. That is, the water-repellent surface treatment may be applied to the entire inner surface defining the space inside the groove 40d.

The protruding height (Lh2 illustrated in FIG. 7) of each protrusion 440 described in the first to fourth embodiments from the groove bottom surface 40s may be, for example, 80% or more and 90% or less of the depth (Lh1 illustrated in FIG. 7) of the groove 40d.

The distance in the first direction D1 between the protrusions 440 disposed inside the groove 40d described in the first to fourth embodiments (e.g., the dimension Lw1 illustrated in FIG. 7) may be, for example, more than 1 time and 125 times or less the dimension in the first direction D1 of the protrusion 440 (the dimension Lw2 illustrated in FIG. 7).

The distance in the first direction D1 between the protrusions 440 (e.g., the dimension Lw1 illustrated in FIG. 7) is preferably, for example, 10 times or more the dimension in the second direction D2 of the protrusion 440 (e.g., the dimension Lh2 illustrated in FIG. 7).

Accordingly, of the electrolyte Es flowing through the flow path FP, at least a portion of the electrolyte Es (electrolyte flow Es3 illustrated in FIG. 6, FIG. 7, and FIG. 8) having climbed over the protrusion 440 to the downstream side D1d in the first direction D1 can flow along the groove bottom surface 40s. For this reason, for example, it is possible to suppress a situation in which at least a portion of the electrolyte Es that has climbed over the protrusion 440 in the first direction D1 merges with the electrolyte Es (for example, the electrolyte flow Es1) guided by the protrusion 440 and changes the flow direction of the electrolyte Es at the merging destination.

In addition, the flow path forming member 443 described in the fifth embodiment may be a porous body having conductivity instead of the mesh structural body. In this case, the void ratio of the porous body is larger than the void ratio of each of the anode power feeder 57 and the cathode power feeder 55. In this case, the number of openings of holes in the porous body, which face the second direction D2, is larger than the number of openings of holes facing the first direction. That is, the flow path resistance of the flow path forming member 443 that the electrolyte Es receives in the second direction D2 is smaller than the flow path resistance of the flow path forming member 443 that the electrolyte Es receives in the first direction D1.

### Supplementary Notes

The electrolysis cell 11 and the electrolyzer 1 according to each of the embodiments is understood as follows, for example.
(1) An electrolysis cell 11 according to a first aspect includes: a first separator (cathode separator 41, anode separator 42) including a first surface (first inner surface 41a, second inner surface 42a); a second separator (cathode separator 41, anode separator 42) disposed with an accommodation space S apart from the first separator, the second separator including a second surface (first inner surface 41a, second inner surface 42a) facing the first surface; an ion-exchange membrane 50 disposed in the accommodation space S; a first power feeder (cathode power feeder 55, anode power feeder 57) disposed between the first separator and the ion-exchange membrane 50; a first catalyst layer (cathode catalyst layer 54, anode catalyst layer 56) disposed between the first power feeder and the ion-exchange membrane 50; a second power feeder (cathode power feeder 55, anode power feeder 57) disposed between the second separator and the ion-exchange membrane 50; a second catalyst layer (cathode catalyst layer 54, anode catalyst layer 56) disposed between the second power feeder and the ion-exchange membrane 50; and a flow direction changing part 44 (protrusion 440, flow path forming member 443) provided as a part of the first separator or provided between the first separator and the first power feeder, the flow direction changing part changing a flow direction of at least a portion of an electrolyte Es flowing along the first surface in a first direction D1 to a second direction D2 intersecting the first surface at each of a plurality of positions in the first direction D1.
   Accordingly, at least a portion of the electrolyte Es flowing in the first direction D1 is guided by the flow direction changing part 44 and flows in the second direction D2 toward the first catalyst layer. This diffuses the guided electrolyte Es to replace the electrolyte Es electrolyzed by the first catalyst layer in the vicinity of the first catalyst layer inside the first power feeder.
(2) An electrolysis cell 11 according to a second aspect is the electrolysis cell 11 according to (1), in which the first separator may include a separator main body (cathode separator main body 410, anode separator main body 420) including the first surface, the flow direction changing part 44 may include a plurality of first protrusions 441 protruding from the separator main body toward the ion-exchange membrane 50, the plurality of first protrusions 441 may be disposed separately from each other in the first direction D1.
   Thus, the change in the flow direction of the electrolyte Es at each of the plurality of positions in the first direction D1 is realized by the plurality of first protrusions 441 disposed separately from each other in the first direction D1. That is, the above action can be realized by a more specific configuration.
(3) An electrolysis cell 11 according to a third aspect is the electrolysis cell 11 according to (2), in which the separator main body may include a first groove 40d1 defining a first flow path FP1 along the first direction D1, and the plurality of first protrusions 441 may be disposed inside the first groove 40d1.
   Accordingly, the first protrusions 441 are disposed in the first flow path FP1, and thus it is possible to more smoothly change the flow direction of the electrolyte Es flowing through the first flow path FP1, for example, as compared with the case where the first protrusions 441 are not disposed inside the first groove 40d1. That is, it is possible to achieve the above action with higher accuracy.
(4) An electrolysis cell 11 according to a fourth aspect is the electrolysis cell 11 according to (3), in which the separator main body may include a first portion 40p1 and a second portion 40p2 that are disposed separately on both sides of the first groove 40d1 in a third direction D3, which is a direction along the first surface and intersects the first direction D1, a protruding height of the plurality of first protrusions 441 may be smaller than a depth of the first groove 40d1, and the first portion 40p1 and the second portion 40p2 are in contact with the first power feeder in a state in which the plurality of first protrusions 441 are separated from the first power feeder.
   In the electrolysis cell 11, bubbles are generated in association with electrolytic reduction. At least some of the bubbles generated in association with the electrolytic reduction in the vicinity of the first catalyst layer may pass through the inside of the first power feeder in the second direction D2 and move to the first flow path FP1. According to the above configuration, in the first flow path FP1, a gap exists between each of the plurality of first protrusions 441 and the first power feeder. Due to this, at least some of the bubbles that have moved to the first flow path FP1 can flow in the first direction D1 while passing through the gap in accordance with the flow of the electrolyte Es. Thus, bubbles generated in association with the electrolytic reduction can be efficiently recovered without being retained in the first flow path FP1.
(5) An electrolysis cell 11 according to a fifth aspect is the electrolysis cell 11 according to (3) or (4), in which between each of the plurality of first protrusions 441 and the first power feeder, a gap larger than an average size of bubbles generated between the first separator and the ion-exchange membrane 50 in a pressure environment during operation of the electrolysis cell 11 may exist.
   This makes it easier for at least some of the bubbles having moved to the first flow path FP1 to pass through the gap between the first protrusion 441 and the first power feeder in accordance with the flow of the electrolyte Es. This can achieve the above action with higher accuracy.
(6) An electrolysis cell 11 according to a sixth aspect is the electrolysis cell 11 according to any one of (3) to (5), in which each of the plurality of first protrusions 441 may include a changing part 44s in which a protruding amount from the separator main body gradually increases toward the first direction D1.
   Thus, at least a portion of the electrolyte Es flowing in the first direction D1 through the first flow path FP1 can be caused to flow toward the second direction D2 with a simple configuration in which the changing part 44s is provided inside the first groove 40d1.
(7) An electrolysis cell 11 according to a seventh aspect is the electrolysis cell 11 according to any one of (3) to (6), in which water-repellent surface treatment may be applied on at least surfaces of the plurality of first protrusions 441.
   This makes it easy for the electrolyte Es flowing through the first flow path FP1 to be repelled from the surfaces of the first protrusions 441. Thus, the electrolyte Es flowing through the first flow path FP1 can be more smoothly guided to the second direction D2 (the ion-exchange membrane 50 side). This can achieve the above action with higher accuracy.
(8) An electrolysis cell 11 according to an eighth aspect is the electrolysis cell 11 according to any one of (3) to (7), in which the separator main body may include a second groove 40d2 adjacent to the first groove 40d1 in a third direction D3, which is a direction along the first surface and intersects the first direction D1, the second groove 40d2 defining a second flow path FP2 along the first direction D1, the flow direction changing part 44 may include a plurality of second protrusions 442 protruding from the separator main body toward the ion-exchange membrane 50, and the plurality of second protrusions 442 may be disposed inside the second groove 40d2.
   Accordingly, at least a portion of the electrolyte Es flowing through the first flow path FP1 can flow into the second flow path FP2 adjacent to the first flow path FP1 in the third direction D3 via the first power feeder. The above action is also realized for at least a portion of the electrolyte Es flowing into the second flow path FP2. In addition, at least a portion of the electrolyte Es flowing through the second flow path FP2 can flow into the first flow path FP1 via the first power feeder.
(9) An electrolysis cell 11 according to a ninth aspect is the electrolysis cell 11 according to (8), in which at least two protrusions 440 included in the plurality of first protrusions 441 and at least two protrusions 440 included in the plurality of second protrusions 442 may be disposed in a staggered manner with respect to the first direction D1.
   Accordingly, at least a portion of the electrolyte Es flowing from the first flow path FP1 into the second flow path FP2 easily hits the second protrusion 442, and thus the flow direction of the electrolyte Es having hit the second protrusion 442 changes to the second direction D2 also in the second flow path FP2. In addition, at least a portion of the electrolyte Es having flowed from the second flow path FP2 into the first flow path FP1 easily hits the first protrusion 441, and thus the flow direction of the electrolyte Es having hit the first protrusion 441 changes to the second direction D2 also in the first flow path FP1. Accordingly, it is possible to realize the above action with higher accuracy, for example, as compared with a case where they are not arranged in a staggered manner.
(10) An electrolysis cell 11 according to a tenth aspect is the electrolysis cell 11 according to (1), in which the flow direction changing part 44 may include a flow path forming member 443 including a mesh structural body or a porous body.
   Accordingly, at least a portion of the electrolyte Es flowing in the first direction D1 is guided by the mesh structural body to flow in the second direction D2 toward the first catalyst layer. This diffuses the guided electrolyte Es to replace the electrolyte Es electrolyzed by the first catalyst layer in the vicinity of the first catalyst layer inside the first power feeder. That is, the above action can be realized by a more specific configuration.
(11) An electrolysis cell 11 according to an eleventh aspect is the electrolysis cell 11 according to (10), in which the flow path forming member 443 may have conductivity, and may be provided between the first separator and the first power feeder and electrically connect the first separator and the first power feeder.
   Thus, even when the flow path through which the electrolyte Es flows is provided in the first separator, electricity required for electrolytic reduction is more easily transmitted from the first separator to the first power feeder, as compared with a case where the flow path forming member 443 is not conductive, for example.
(12) An electrolysis cell 11 according to a twelfth aspect is the electrolysis cell 11 according to (10) or (11), in which a void ratio of the flow path forming member 443 may be larger than a void ratio of the first power feeder.
   Thus, the electrolyte Es flows more easily inside the flow path forming member 443 than inside the first power feeder. As a result, the electrolyte Es can be smoothly supplied from the flow path forming member 443 to the first power feeder.
(13) An electrolysis cell 11 according to a thirteenth aspect is the electrolysis cell 11 according to any one of (10) to (12), in which in the flow path forming member 443, flow path resistance in the second direction D2 may be smaller than flow path resistance in the first direction D1.
   Thus, the electrolyte Es flowing inside the flow path forming member 443 more easily flows in the second direction D2 than in the first direction D1. As a result, it is possible to achieve the above action with higher accuracy.
(14) An electrolyzer 1 according to a fourteenth aspect includes: the electrolysis cell 11 according to any one of (1) to (13); an electrolyte supply unit 20 that supplies the electrolyte Es to the electrolysis cell 11; and a power supply unit 30 that applies voltage to the electrolysis cell 11.

### Industrial Applicability

The present disclosure can provide an electrolysis cell and an electrolyzer which can improve the electrolysis efficiency.

### Reference Signs List

1 ··· electrolyzer, 10 ··· electrolysis cell stack, 11 ··· electrolysis cell, 20 ··· electrolyte supply unit, 20a ··· cathode-side supply unit, 20b ··· anode-side supply unit, 21 ··· hydrogen gas-liquid separation device, 22 ··· first pump, 23 ··· hydrogen recovery unit, 24 ··· first electrolyte supply unit, 26 ··· oxygen gas-liquid separation device, 27 ··· second pump, 28 ··· oxygen recovery unit, 29 ··· second electrolyte supply unit, 30 ··· power supply unit, 40 ··· electrolytic tank, 40d ··· groove, 40d' ··· recessed portion, 40d1 ··· first groove, 40d2 ··· second groove, 40p1 ··· first portion, 40p2 ··· second portion, 40s ··· groove bottom surface, 41 ··· cathode separator, 41a ··· first inner surface, 41b ··· surface facing a side opposite to the first inner surface, 42b ··· surface facing a side opposite to the second inner surface, 41e1, 42e1 ··· first separator end portion, 41e2, 42e2 ··· second separator end portion, 42 ··· anode separator, 42a ··· second inner surface, 43 ··· membrane electrode assembly, 44 ··· flow direction changing part, 44s ··· changing part, 44t ··· connection portion, 47 ··· cathode, 48 ··· anode, 50 ··· ion-exchange membrane, 50a ··· first exchange membrane surface, 50b ··· second exchange membrane surface, 50e ··· outer edge portion, 54 ··· cathode catalyst layer, 55 ··· cathode power feeder, 55a ··· first cathode surface, 55b ··· second cathode surface, 56 ··· anode catalyst layer, 57 ··· anode power feeder, 57a ··· first anode surface, 57b ··· second anode surface, 61 ··· first current collector, 62 ··· second current collector, 63 ··· first insulator, 64 ··· second insulator, 65 ··· first insulating material, 66 ··· second insulating material, 67 ··· first end flange, 68 ··· second end flange, 70 ··· support part, 71 ··· first support part, 72 ··· second support part, 80 ··· sealing part, 81 ··· first sealing part, 82 ··· second sealing part, 410 ··· cathode separator main body, 420 ··· anode separator main body, 440 ··· protrusion, 440a ··· upstream surface, 440b ··· downstream surface, 440c ··· connection surface, 441 ··· first protrusion, 442 ··· second protrusion, 443 ··· flow path forming member, C ··· central portion, D1 ··· first direction, D1u ··· upstream side, D1d ··· downstream side, D2 ··· second direction, D3 ··· third direction, Es ··· electrolyte, FP ··· flow path, FP1 ··· first flow path, FP2 ··· second flow path, L1, L2, L3, L4 ··· piping line, S ··· accommodation space, Sa ··· cathode chamber, Sb ··· anode chamber

## Claims

1. An electrolysis cell, comprising:
a first separator comprising a first surface;
a second separator disposed with an accommodation space apart from the first separator, the second separator comprising a second surface facing the first surface;
an ion-exchange membrane disposed in the accommodation space;
a first power feeder disposed between the first separator and the ion-exchange membrane;
a first catalyst layer disposed between the first power feeder and the ion-exchange membrane;
a second power feeder disposed between the second separator and the ion-exchange membrane;
a second catalyst layer disposed between the second power feeder and the ion-exchange membrane; and
a flow direction changing part provided as a part of the first separator or provided between the first separator and the first power feeder, the flow direction changing part being configured to change a flow direction of at least a portion of an electrolyte flowing along the first surface in a first direction to a second direction intersecting the first surface at each of a plurality of positions in the first direction.

2. The electrolysis cell according to claim 1, wherein
the first separator comprises a separator main body comprising the first surface, and
the flow direction changing part comprises a plurality of first protrusions protruding from the separator main body toward the ion-exchange membrane, the plurality of first protrusions being disposed separately from each other in the first direction.

3. The electrolysis cell according to claim 2, wherein
the separator main body comprises a first groove configured to define a first flow path along the first direction, and
the plurality of first protrusions are disposed inside the first groove.

4. The electrolysis cell according to claim 3, wherein
the separator main body comprises a first portion and a second portion, the first portion and the second portion being disposed separately on both sides of the first groove in a third direction, the third direction being a direction along the first surface and intersecting the first direction, a protruding height of the plurality of first protrusions is smaller than a depth of the first groove, and
the first portion and the second portion are in contact with the first power feeder in a state in which the plurality of first protrusions are separated from the first power feeder.

5. The electrolysis cell according to claim 3, wherein
between each of the plurality of first protrusions and the first power feeder, a gap larger than an average size of bubbles generated between the first separator and the ion-exchange membrane in a pressure environment during operation of the electrolysis cell exists.

6. The electrolysis cell according to claim 3, wherein
each of the plurality of first protrusions comprises a changing part in which a protruding amount from the separator main body gradually increases toward the first direction.

7. The electrolysis cell according to claim 3, wherein
water-repellent surface treatment is applied to at least surfaces of the plurality of first protrusions.

8. The electrolysis cell according to claim 3, wherein
the separator main body comprises a second groove adjacent to the first groove in a third direction, the third direction being a direction along the first surface and intersecting the first direction, the second groove being configured to define a second flow path along the first direction, and
the flow direction changing part comprises a plurality of second protrusions protruding from the separator main body toward the ion-exchange membrane, the plurality of second protrusions being disposed inside the second groove.

9. The electrolysis cell according to claim 8, wherein
at least two protrusions included in the plurality of first protrusions and at least two protrusions included in the plurality of second protrusions are disposed in a staggered manner with respect to the first direction.

10. The electrolysis cell according to claim 1, wherein
the flow direction changing part comprises a flow path forming member comprising a mesh structural body or a porous body.

11. The electrolysis cell according to claim 10, wherein
the flow path forming member has conductivity, and is provided between the first separator and the first power feeder and configured to connect electrically the first separator and the first power feeder.

12. The electrolysis cell according to claim 10, wherein
a void ratio of the flow path forming member is larger than a void ratio of the first power feeder.

13. The electrolysis cell according to claim 10, wherein
in the flow path forming member, flow path resistance in the second direction is smaller than flow path resistance in the first direction.

14. An electrolyzer, comprising:
the electrolysis cell according to any one of claims 1 to 13;
an electrolyte supply unit configured to supply the electrolyte to the electrolysis cell; and
a power supply unit configured to apply voltage to the electrolytic cell.
